# EUROPEAN PATENT SPECIFICATION

(11) **EP 3 798 833 B1**
(45) Date of publication and mention of the grant of the patent: **03.01.2024**
(21) Application number: 20178590.4
(22) Date of filing: 05.06.2020
(51) Int. Cl.: G06F 9/50, G06F 9/54, G06F 11/30, G06F 16/903, G06F 21/60, G06F 21/62, H04L 9/08, H04L 9/40, H04L 41/0894, H04L 41/0895, H04L 41/0896

(54) **METHODS, SYSTEM, ARTICLES OF MANUFACTURE, AND APPARATUS TO MANAGE TELEMETRY DATA IN AN EDGE ENVIRONMENT**
VERFAHREN, SYSTEM, HERSTELLUNGSARTIKEL UND VORRICHTUNG ZUR VERWALTUNG VON TELEMETRIEDATEN IN EINER RANDUMGEBUNG
PROCÉDÉS, SYSTÈME, ARTICLES DE FABRICATION ET APPAREIL POUR GÉRER DES DONNÉES TÉLÉMÉTRIQUES DANS UN ENVIRONNEMENT DE BORD

(30) Priority: 28.09.2019 US 201962907597 P; 22.11.2019 US 201962939303 P; 20.12.2019 US 201916723277
(43) Date of publication of application: 31.03.2021
(73) Proprietor: Intel Corporation, Santa Clara, CA 95054 (US)
(72) Inventor: TIMOTHY, Verrall, Pleasant Hill, California 94523 (US); SMITH, Ned M., Beaverton, Oregon 97006 (US); DOSHI, Kshitij Arun, Tempe, Arizona 85282 (US); GUIM BERNAT, Francesc, 08036 Barcelona (ES); GADIYAR, Rajesh, Chandler, AZ Arizona 85224 (US)
(74) Representative: Maiwald GmbH

(56) References cited:
- WO-A1-2006/056534
- US-A1- 2019 158 300
- US-A1- 2019 158 606
- US-A1- 2019 281 132

## Description

### FIELD OF THE DISCLOSURE

This disclosure relates generally to edge environments, and, more particularly, to a method and an apparatus to manage telemetry data in an edge environment.

### BACKGROUND

Edge environments (e.g., an Edge, Fog, multi-access edge computing (MEC), or Internet of Things (IoT) network) enable a workload execution (e.g., an execution of one or more computing tasks, an execution of a machine learning model using input data, etc.) near endpoint devices that request an execution of the workload. Edge environments may include infrastructure, such as an edge platform, that is connected to an edge cloud and/or data center cloud infrastructures, endpoint devices, or additional edge infrastructure via networks such as the Internet. Edge platforms may be closer in proximity to endpoint devices than public and/or private cloud infrastructure including servers in traditional data-center clouds.

US 2019/058606 A1 discloses migrating the execution of services on behalf of an edge device from a source base station to a target base station. The source base station transmits current service requirements to the target base station. For the resource allocation, telemetry services may be involved. In the case that all services cannot immediately be made available at the target base station, the services are executed in order of priority.

US 2019/158300 A1 describes multi-access edge computing billing and charging tracking enhancements.

US 2019/281132 A1 describes technologies for managing sensor and telemetry data on an edge networking platform.

WO 2006/056534 A1 describes a method for ensuring the quality of a service in a distributed computing environment.

### SUMMARY

The invention is defined by the appended claims.

### BRIEF DESCRIPTION OF THE DRAWINGS

FIG. 1 depicts an example environment including an example cloud environment, an example edge environment, an example endpoint environment, and example telemetry controllers to aggregate telemetry data.
FIG. 2 depicts an example block diagram illustrating an example implementation of the telemetry controller of FIG. 1.
FIG. 3 is a flowchart representative of a process that may be implemented using logic or machine readable instructions that may be executed to implement the telemetry controller of FIGS. 1 and/or 2 when a wish list is obtained from a consumer.
FIG. 4 is a flowchart representative of a process that may be implemented using logic or machine readable instructions that may be executed to implement the telemetry controller of FIGS. 1 and/or 2 when a wish list is published.
FIG. 5 is a flowchart representative of a process that may be implemented using logic or machine readable instructions that may be executed to the extractor of FIG. 2 to process a commitment by extracting and/or aggregating telemetry data.
FIG. 6 is a flowchart representative of a process that may be implemented using logic or machine readable instructions that may be executed to implement the collector of FIG. 2 to process a commitment by collecting telemetry data.
FIG. 7 is a flowchart representative of a process that may be implemented using logic or machine readable instructions that may be executed to implement the indexer of FIG. 2 to process a commitment by indexing and/or searching telemetry data.
FIG. 8 is a flowchart representative of a process that may be implemented using logic or machine readable instructions that may be executed to implement the communication interface of FIG. 2 to establish the priority channel of FIG. 1.
FIG. 9 is a block diagram of an example processor platform structured to execute the instructions of FIGS. 3, 4, 5, 6, 7, and/or 8 to implement the telemetry controller of FIGS. 1 and/or 2.

The figures are not to scale. In general, the same reference numbers will be used throughout the drawing(s) and accompanying written description to refer to the same or like parts. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other.

### DETAILED DESCRIPTION

Descriptors "first," "second," "third," etc. are used herein when identifying multiple elements or components which may be referred to separately. Unless otherwise specified or understood based on their context of use, such descriptors are not intended to impute any meaning of priority, physical order or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

Edge computing, at a general level, refers to the transition of compute and storage resources closer to endpoint devices (e.g., consumer computing devices, user equipment, etc.) to optimize total cost of ownership, reduce application latency, improve service capabilities, and improve compliance with data privacy or security requirements. Edge computing may, in some scenarios, provide a cloud-like distributed service that offers orchestration and management for applications among many types of storage and compute resources. As a result, some implementations of edge computing have been referred to as the "edge cloud" or the "fog," as powerful computing resources previously available only in large remote data centers are moved closer to endpoints and made available for use by consumers at the "edge" of the network. In some examples, edge computing can include multiple "edges," such as, for example, an edge directed toward IoT devices, an edge directed towards a cloud network, an edge directed toward mobile and/or multi-access edges (e.g., cell phones, drones, autonomous vehicles), and/or an edge directed toward private clouds, information technology (IT), etc.

Edge computing use cases in mobile network settings have been developed for integration with multi-access edge computing (MEC) approaches, also known as "mobile edge computing." MEC approaches are designed to allow application developers and content providers to access computing capabilities and an IT service environment in dynamic mobile network settings at the edge of the network. Limited standards have been developed by the European Telecommunications Standards Institute (ETSI) industry specification group (ISG) in an attempt to define common interfaces for operation of MEC systems, platforms, hosts, services, and applications.

Edge computing, MEC, and related technologies attempt to provide reduced latency, increased responsiveness, and more available computing power than offered in traditional cloud network services and wide area network connections. However, the integration of mobility and dynamically launched services to some mobile use and device processing use cases has led to limitations and concerns with orchestration, functional coordination, and resource management, especially in complex mobility settings where many participants (e.g., devices, hosts, tenants, platforms, service providers, operators, etc.) are involved.

In a similar manner, Internet of Things (IoT) networks and devices are designed to offer a distributed compute arrangement from a variety of endpoints. IoT devices can be physical or virtualized objects that may communicate on a network, and can include sensors, actuators, and other input/output components, which may be used to collect data or perform actions in a real-world environment. For example, IoT devices can include low-powered endpoint devices that are embedded or attached to everyday things, such as buildings, vehicles, packages, etc., to provide an additional level of artificial sensory perception of those things. In recent years, IoT devices have become more popular and thus applications using these devices have proliferated.

The deployment of various Edge, Fog, MEC, and IoT networks, devices, and services have introduced a number of advanced use cases and scenarios occurring at and towards the edge of the network. However, these advanced use cases have also introduced a number of corresponding technical challenges relating to security, processing and network resources, service availability and efficiency, among many other issues. One such challenge is in relation to Edge, Fog, MEC, and IoT networks, devices, and services executing workloads on behalf of endpoint devices.

In some examples, an edge environment can include an enterprise edge in which communication with and/or communication within the enterprise edge can be facilitated via wireless and/or wired connectivity. The deployment of various Edge, Fog, MEC, and IoT networks, devices, and services have introduced a number of advanced use cases and scenarios occurring at and towards the edge of the network. However, these advanced use cases have also introduced a number of corresponding technical challenges relating to security, processing and network resources, service availability and efficiency, among many other issues. One such challenge is in relation to Edge, Fog, MEC, and IoT networks, devices, and services executing workloads on behalf of endpoint devices.

The present techniques and configurations may be utilized in connection with many aspects of current networking systems, but are provided with reference to Edge Cloud, IoT, Multi-access Edge Computing (MEC), and other distributed computing deployments. The following systems and techniques may be implemented in, or augment, a variety of distributed, virtualized, or managed edge computing systems. These include environments in which network services are implemented or managed using multi-access edge computing (MEC), fourth generation (4G) or fifth generation (5G) wireless network configurations; or in wired network configurations involving fiber, copper, and other connections. Further, aspects of processing by the respective computing components may involve computational elements which are in geographical proximity of a user equipment or other endpoint locations, such as a smartphone, vehicular communication component, IoT device, etc. Further, the presently disclosed techniques may relate to other Edge/MEC/IoT network communication standards and configurations, and other intermediate processing entities and architectures.

Edge computing is a developing paradigm where computing is performed at or closer to the "edge" of a network, typically through the use of a computing platform implemented at base stations, gateways, network routers, or other devices which are much closer to end point devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with computing hardware that performs virtualized network functions and offers compute resources for the execution of services and consumer functions for connected devices.

Edge environments and/or otherwise edge clouds include networks and/or portions of networks that are located between a cloud environment and an endpoint environment. Edge environments enable computations of workloads at edges of a network. For example, an endpoint device may request a nearby base station to compute a workload rather than a central server in a data center cloud environment. Edge environments include edge platforms, which include pools of memory, storage resources, and processing resources. Edge platforms perform computations, such as an execution of a workload, on behalf of other edge platforms, edge services, and/or edge nodes. Edge environments facilitate connections between producers (e.g., workload executors, edge platforms) and consumers (e.g., other edge platforms, endpoint devices).

Because edge platforms may be closer in proximity to endpoint devices than centralized servers in cloud environments, edge platforms enable computations of workloads with a lower latency (e.g., response time) than cloud environments. Edge platforms may also enable a localized execution of a workload based on geographic locations or network topographies. For example, an endpoint device may require a workload to be executed in a first geographic area, but a centralized server may be located in a second geographic area. The endpoint device can request a workload execution by an edge platform located in the first geographic area to comply with corporate or regulatory restrictions.

Examples of workloads to be executed in an edge environment include autonomous driving computations, video surveillance monitoring, machine learning model executions, and real time data analytics. Additional examples of workloads include delivering and/or encoding media streams, measuring advertisement impression rates, object detection in media streams, speech analytics, asset and/or inventory management, and augmented reality processing.

Edge platforms enable both the execution of workloads and a return of a result of an executed workload to endpoint devices with a response time lower than the response time of a server in a cloud environment. For example, if an edge platform is located closer to an endpoint device on a network than a cloud server, the edge platform may respond to workload execution requests from the endpoint device faster than the cloud server. An endpoint device may request an execution of a time-constrained workload from an edge platform rather than a cloud server. As used herein, a cloud environment may include a combination of edge clouds and/or any suitable backend components in a data center, cloud infrastructure, etc.

In addition, edge platforms enable the distribution and decentralization of workload executions. For example, an endpoint device may request a first workload execution and a second workload execution. In some examples, a cloud server may respond to both workload execution requests. With an edge environment, however, a first edge platform may execute the first workload execution request, and a second edge platform may execute the second workload execution request.

To meet the low-latency and high-bandwidth demands of endpoint devices, orchestration in edge clouds has to be performed on the basis of timely information about the utilization of many resources (e.g., hardware resources, software resources, virtual hardware and/or software resources, etc.), and the efficiency with which those resources are able to meet the demands placed on them. Such timely information is generally referred to as telemetry (e.g., telemetry data, telemetry information, etc.).

Telemetry can be generated from a plurality of sources including each hardware component or portion thereof, virtual machines (VMs), operating systems (OSes), applications, and orchestrators. Telemetry can be used by edge platforms, orchestrators, schedulers, etc., to determine a quantity and/or type of computation tasks to be scheduled for execution at which resource or portion(s) thereof, and an expected time to completion of such computation tasks based on historical and/or current (e.g., instant or near-instant) telemetry. For example, a core of a multi-core central processing unit (CPU) can generate over a thousand different varieties of information every fraction of a second using a performance monitoring unit (PNW) sampling the core and/or, more generally, the multi-core CPU. Periodically aggregating and processing all such telemetry in a given edge platform, edge service, etc., to obtain a different distilled metric of interest at different times can be an arduous and cumbersome process. Prioritizing salient features of interest and extracting such salient features from telemetry to identify current or future problems, stressors, etc., associated with a resource is difficult. Furthermore, identifying a different resource to offload workloads from the burdened resource is a complex undertaking.

Further, edge clouds may include a plurality of edge platforms implemented in a decentralized manner. Accordingly, such distributed edge platforms in an edge cloud may aggregate and process telemetry data to perform peer-to-peer tasks such as, for example, migrate a service and/or resource from one edge platform to another edge platform, migrating a tenant, etc. Some edge environments desire to obtain telemetry data associated with resources executing a variety of functions or services, such as data processing or video analytics functions (e.g., machine vision, image processing for autonomous vehicle, facial recognition detection, visual object detection, etc.), extract telemetry data, aggregate telemetry data, index telemetry data, filter telemetry data, search telemetry data. In an edge cloud, each edge platform may be communicatively coupled to a server via intermittent wide area network (WAN) links having variable amount of bandwidth. Additionally, there may be other, low-bandwidth, communication paths (e.g., publish-subscribe paths) accessible by edge platforms via carrier-grade internet (e.g., MQ Telemetry Transport (MQTT) and Internet Protocol version 4 (IPv4)) and/or public internet (e.g., MQTT and Internet Protocol version 6 (IPv6)). In the event an edge platform attempts to migrate a resource, tenant, service, etc., such an edge platform attempts to ascertain telemetry data from other edge platforms in the edge cloud to properly migrate the resource, tenant, service, etc. In this example, the telemetry data may include network congestion data, available resources, etc.

However, because the edge cloud is made up as a decentralized, distributed network of edge platforms, orchestration and load balancing between edge platforms in an edge cloud can be inefficient and/or time consuming. For example, in the event a first edge platform initiates a migration command to offload a task and/or a service to another edge platform, such a first edge platform may not have access to telemetry data from the other edge platforms in the edge cloud. Furthermore, any telemetry data obtained by the first edge platform may be old (e.g., telemetry data that is no longer accurate) and/or obtained with a high transfer latency.

Accordingly, examples disclosed herein implement a decentralized network of edge platforms configured to broker telemetry data in a low-latency manner. In examples disclosed herein, edge platforms in an edge cloud include a telemetry controller configured to broker communication between edge platforms. In this manner, edge platforms can request and subsequently receive telemetry data in a ready-to-use format. In examples disclosed herein, a consumer (e.g., a user of telemetry data, another edge platform, and/or any suitable computing device) may transmit a wish list to the edge platforms in the edge environment. As used herein, a wish list, additionally or alternatively referred to as a telemetry wish list, corresponds to a request by consumers (e.g., a user of telemetry data, another edge platform, and/or any suitable computing device) to initiate a task such as, for example, obtaining resource utilizations to migrate a service, migrate a tenant, offload a service, etc. Further, a wish list (e.g., telemetry wish list) may identify when the information is to be obtained and/or otherwise retrieved (e.g., obtain the information now, obtain the information for a ten minute period, obtain the information to be generally available for access, etc.). To determine whether other edge platforms in the edge environment are capable of executing such a task, data relating to the tasks in the wish list (e.g., telemetry wish list) is brokered and obtained. In such examples disclosed herein, the edge platforms are configured to broker commitments to tasks in the wish list (e.g., telemetry wish list). For example, a wish list (e.g., telemetry wish list) may (1) request telemetry data from device A, (2) request a specified set of telemetry data to be extracted, and (3) request the specified set of telemetry data to be aggregated. Further in such an example, device A may transmit a commitment to the edge environment indicating responsibility for (1) collecting telemetry data, device B may transmit a commitment to the edge environment indicating responsibility to (2) extract the specified set of telemetry data, and device C (or any other suitable device such as, for example, device A or device B) may transmit a commitment to the edge environment indicating responsibility to (3) aggregate the previously extracted specified set of data.

Further, examples disclosed herein, edge platforms in an edge cloud are capable of performing local filtering to deliver high-quality, succinct telemetry data. Examples disclosed herein utilize a computing overlay distributed across edge platforms in an edge cloud to overlay a naming and accessing layer for telemetry data. Examples disclosed herein implement a distributed metadata lake including contributors, filterers, indexers, and accessors. As used herein, a distributed metadata lake refers to a repository and/or storage mechanism of data that can be stored physically in a one or more computing devices, computing machines, servers, etc. Data stored in a metadata lake may be physically distributed amongst edge servers, yet in examples disclosed herein, the metadata lake serves as an aggregation point for high level semantic information, filtering, etc. In examples disclosed herein, the telemetry data stored in the metadata lake may be lossy.

Examples disclosed herein utilize a distributed metadata lake operable to deliver timely information (e.g., timely telemetry data transfer) to various edge platforms in an edge cloud. In examples disclosed herein, the data stored in the metadata lake can be updated continuously to reduce the amount of lossy data stored and/or transferred in and/or from the metadata lake. To achieve this, examples disclosed herein may broker telemetry data among edge platforms (e.g., implement a crowd-sharing protocol, implement commitments, etc.) to ensure independency of operation and transactional consistency. Thus, data stored in the metadata lake may be continually updated and, though a portion of the data may be lost, the overall patterns in the data are robustly identifiable, interpolate-able, and/or extrapolate-able.

Examples disclosed herein utilize a naming and dictionary directory structured to store data identifying the edge platform associated with telemetry data. In this manner, examples disclosed herein may perform a lookup of telemetry data if the telemetry data is not up-to-date. For example, if telemetry data is not brokered to the metadata lake continuously, examples disclosed herein may utilize a lookup process to identify the non-updated version (e.g., old version) of the telemetry data. Telemetry data may not be brokered to the metadata lake in the event network conditions inhibit high latency. Further, in this manner, an edge platform and/or user requesting telemetry data may access the telemetry data from the metadata lake independent of the manner in which the telemetry data is obtained, stored, and/or filtered.

In examples disclosed herein, telemetry data transmission to and/or from an edge platform may be initiated based on a voluntary commitment. As used herein, a voluntary commitment refers to a commitment approved and/or otherwise assigned by and/or from a component to execute a task included in a wish list (e.g., telemetry wish list). Further, such a voluntary commitment may be associated with a commitment duration. For example, in the event telemetry data is requested, examples disclosed here may transmit a voluntary commitment request to suitable edge platforms (e.g., edge platforms that are capable of fulfilling the telemetry data request) to provide telemetry data and/or services for the next ten minutes. As used herein, data continuously sent by a component when fulfilling a commitment may be continuously sent when the component obtains telemetry data and/or otherwise executes the task(s) in the wish list (e.g., telemetry wish list). In some examples, continuous transmission of telemetry data may refer to data sent every microsecond, millisecond, hour, day, week, etc. In this manner, telemetry data may be continuously sent to the metadata lake from a number of edge platforms (e.g., participants that have accepted the voluntary commitment) that implement tasks as a result of voluntarily committing. In some examples disclosed herein, acceptance to voluntary commitments may be obtained prior to implementation. In examples disclosed herein, acceptance to voluntary commitments may be incentivized to assist other edge platforms obtain the telemetry data needed. Such an example incentivized method may include providing a preference level (e.g., increasing a credit) with an edge platform which, in turn, may enable such an edge platform to obtain a higher service level agreement (SLA) in obtaining the telemetry data requested at various points in time.

Examples disclosed herein create information domains and credentials to ensure the distributed metadata lake can provide credentialled accesses, both for producers and consumers of information. Because telemetry data may be available for certain time periods, credentialled accessed enables credentials to be rescinded upon expiration of the time period. Furthermore, examples disclosed herein include removing and/or otherwise archiving expired telemetry data (e.g., telemetry data no longer accessible) by removing old telemetry data and/or archiving such old telemetry data into a backend storage (e.g., a cloud storage).

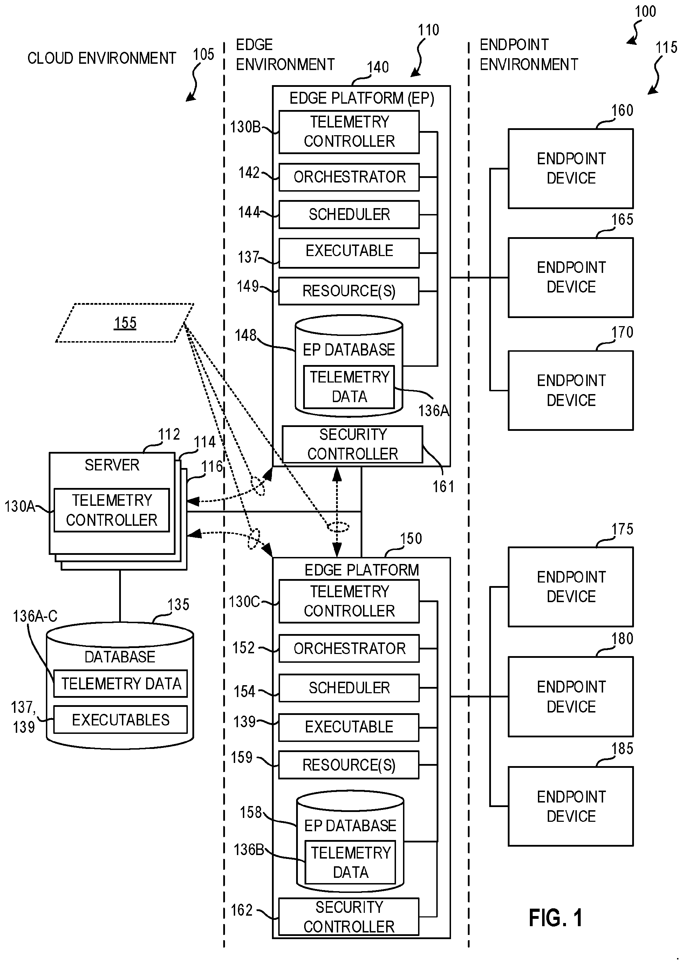

FIG. 1 depicts an example environment (e.g., a computing environment) 100 including an example cloud environment 105, an example edge environment 110, and an example endpoint environment 115 to schedule, distribute, and/or execute a workload (e.g., one or more computing or processing tasks). In FIG. 1, the cloud environment 105 includes a first example server 112, a second example server 114, a third example server 116, a first instance of an example telemetry controller 130A, and an example database (e.g., a cloud database, a cloud environment database, etc.) 135. In FIG. 1, the cloud environment 105 is an edge cloud environment. For example, the cloud environment 105 may include any suitable number of edge clouds. Alternatively, the cloud environment 105 may include any suitable backend components in a data center, cloud infrastructure, etc. Alternatively, the cloud environment 105 may include fewer or more servers than the servers 112, 114, 116 depicted in FIG. 1. The servers 112, 114, 116 can execute centralized applications (e.g., website hosting, data management, machine learning model applications, responding to requests from client devices, etc.).

In the illustrated example of FIG. 1, the telemetry controller 130A facilitates the generation and/or retrieval of example telemetry data 136A-C associated with at least one of the cloud environment 105, the edge environment 110, or the endpoint environment 115. In FIG. 1, the database 135 includes an example first executable 137 and an example second executable 139. Alternatively, the database 135 may include fewer or more executables than the first executable 137 and the second executable 139. For example, the executables 137, 139 can be telemetry executables that, when executed, generate the telemetry data 136A-C. In examples disclosed herein, the first executable 137 may implement first means for executing. In examples disclosed herein, the second executable 139 may implement second means for executing.

In the illustrated example of FIG. 1, the telemetry data 136A-C includes example first telemetry data 136A, example second telemetry data 136B, and example third telemetry data 136C. In FIG. 1, the first telemetry data 136A and the second telemetry data 136B can be generated by the edge environment 110. In FIG. 1, the third telemetry data 136C can be generated by one or more of the servers 112, 114, 116, the database 135, etc., and/or, more generally, the cloud environment 105.

In the illustrated example of FIG. 1, the servers 112, 114, 116 communicate with devices in the edge environment 110 and/or the endpoint environment 115 via a network such as the Internet. In examples disclosed herein, the servers 112, 114, 116 may communicate with the devices in the edge environment 110 and/or the endpoint environment 115 via WAN links having a variable amount of bandwidth. Additionally, in examples disclosed herein, the servers 112, 114, 116 may communicate example telemetry data (e.g., the telemetry data 136A-C stored locally and/or telemetry data obtained by the telemetry controller 130A) to the devices in the edge environment 110 and/or the endpoint environment 115 via an example priority channel 155. Description of the priority channel 155 is described below.

In the illustrated example of FIG. 1, the cloud environment 105 includes the database 135 to record data (e.g., the telemetry data 136A-C, the executables 137, 139, etc.). In some examples, the database 135 stores information including database records, website requests, machine learning models, and results of executing machine learning models. The example database 135 is a distributed database across all edge platforms, and stores raw and transformed information. The example database 135 can be implemented by a volatile memory (e.g., a Synchronous Dynamic Random Access Memory (SDRAM), Dynamic Random Access Memory (DRAM), RAMBUS Dynamic Random Access Memory (RDRAM), etc.) and/or a non-volatile memory (e.g., flash memory, Intel^{®} Optane^{®} DC Persistent Memory Module (DCPMM^{™}), etc.). The example database 135 can additionally or alternatively be implemented by one or more double data rate (DDR) memories, such as DDR, DDR2, DDR3, DDR4, mobile DDR (mDDR), etc. In some examples disclosed herein, the database 135 may be decentralized in the form of a blockchain, distributed cluster, a hierarchical service such as Domain Name Service (DNS) and/or a DNS-based Authentication of Named Entities (DANE), an information-centric network (ICN), a named data network (NDN), a named function network (NFN), a content delivery network (CDN), an IoT network, and/or industrial IoT (IIoT) network that implements a discovery mechanism for IoT resources. Further, the database 135 may be structured to associate data from participants to establish a view telemetry data through the lens of the aggregation function. In examples disclosed herein, the aggregation function may be an artificial intelligence (AI) analytics engine or complex stochastic analysis (e.g., a Monte Carlo simulation).

The example database 135 can additionally or alternatively be implemented by one or more mass storage devices such as hard disk drive(s), compact disk drive(s), digital versatile disk drive(s), solid-state disk drive(s), etc. While in the illustrated example of FIG. 1 the database 135 is illustrated as a single database, the example database 135 can be implemented by any number and/or type(s) of databases. Furthermore, the data stored in the database 135 can be in any data format such as, for example, binary data, comma delimited data, tab delimited data, structured query language (SQL) structures, etc. Likewise, the example database 135 can provide and/or store data records in response to requests from devices in the cloud environment 105, the edge environment 110, and/or the endpoint environment 115.

In the illustrated example of FIG. 1, the edge environment 110 includes an example first edge platform 140 and an example second edge platform 150. In the illustrated example of FIG. 1, the first and second edge platforms 140, 150 are edge-computing platforms or platform services. For example, the edge platforms 140, 150 can include hardware and/or software resources, virtualizations of the hardware and/or software resources, container based computational resources, etc., and/or a combination thereof. In such examples, the edge platforms 140, 150 can execute a workload obtained from an edge or endpoint device as illustrated in the example of FIG. 1. Further, the example edge platforms 140, 150 are structured to obtain and broker consumer wish lists (e.g., telemetry wish lists).

In examples disclosed herein, the edge environment 110 is formed from network components and functional features operated by and within the edge platforms 140, 150. The edge environment 110 may be implemented as any type of network that provides edge computing and/or storage resources which are proximately located to radio access network (RAN) capable endpoint devices (e.g., mobile computing devices, IoT devices, smart devices, etc.), which are shown in FIG. 1 as the endpoint devices 160, 165, 170, 175, 180, 185. In other words, the edge environment 110 may be envisioned as an "edge" which connects the endpoint devices and traditional network access points that serves as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

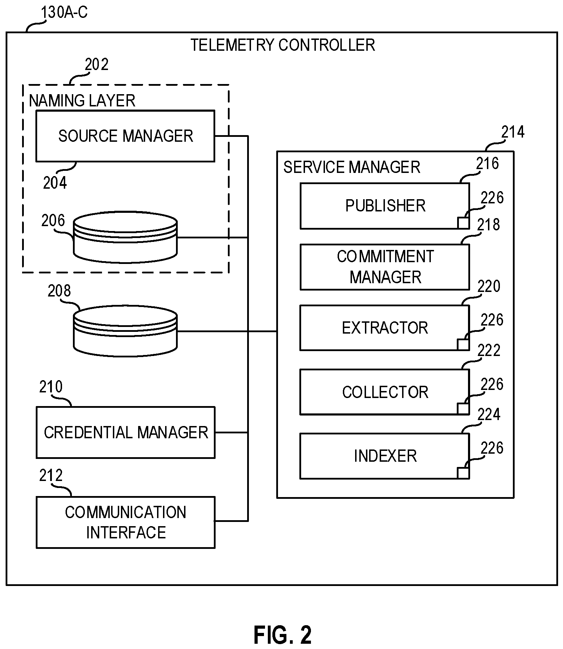

In the illustrated example of FIG. 1, the first edge platform 140 includes a second instance of the telemetry controller 130B, the first executable 137, an example first orchestrator 142, an example first scheduler 144, an example first edge platform (EP) database 148, an example first resource(s) 149, and an example first security controller 161. In FIG. 1, the first EP database 148 includes the first telemetry data 136A. In examples disclosed herein, the first EP database 148 is a local database, shard, slice, replica, and/or partition of a distributed database to the edge platform 140. Further, the example telemetry data 136A is local telemetry data to the edge platform 140. Further description of a distributed database structured to assist in brokering telemetry data is described below in connection with the telemetry controller 130A, 130B, 130C, and/or FIG. 2.

In the illustrated example of FIG. 1, the second edge platform 150 includes a third instance of the telemetry controller 130C, the second executable 139, an example second orchestrator 152, an example second scheduler 154, an example second EP database 158, an example second resource(s) 159, and an example second security controller 162. In examples disclosed herein, the second EP database 158 is a local database to the edge platform 150. Further, the example telemetry data 136B is local telemetry data to the edge platform 150. Further description of a distributed database configured to assist in brokering telemetry data is described below in connection with the telemetry controller 130A, 130B, 130C, and/or FIG. 2.

In the illustrated example of FIG. 1, the edge platforms 140, 150 include the EP databases 148, 158 to record local data (e.g., the first telemetry data 136A, the second telemetry data 136B, etc.) and/or cache data stored in the EP databases 148, 158. The EP databases 148, 158 can be implemented by a volatile memory (e.g., a SDRAM, DRAM, RDRAM, etc.) and/or a non-volatile memory (e.g., flash memory, Intel^{®} Optane^{®} DC Persistent Memory Module (DCPMM^{™}), etc.). The EP databases 148, 158 can additionally or alternatively be implemented by one or more DDR memories, such as DDR, DDR2, DDR3, DDR4, mDDR, etc. The EP databases 148, 158 can additionally or alternatively be implemented by one or more mass storage devices such as hard disk drive(s), compact disk drive(s), digital versatile disk drive(s), solid-state disk drive(s), etc. While in the illustrated example the EP databases 148, 158 are illustrated as single databases, the EP databases 148, 158 can be implemented by any number and/or type(s) of databases. Furthermore, the data stored in the EP databases 148, 158 can be in any data format such as, for example, binary data, comma delimited data, tab delimited data, SQL structures, etc. In examples disclosed herein, the EP databases 148, 158 are a means for storing or a storing means, which are hardware.

In some examples disclosed herein, the telemetry controller 130A-C, the first edge platform 140, and/or the second edge platform 150 may be generated in a hierarchal form (e.g., a directed graph of nodes) such that a second tier telemetry controller may be connected to a first tier telemetry controller and a third tier telemetry controller may be connected to the second tier telemetry controller. In this manner, a hierarchy or directed graph of nodes contributing telemetry data can be aggregated into a next tier. In such an example, a distributed database may exist at the tiers (e.g., the first tier, the second tier, and/or the third tier). In examples disclosed herein, the telemetry controller 130A-C is a means for telemetry controlling or a telemetry controlling means, which is hardware.

In the example illustrated in FIG. 1, the telemetry controller 130B, the first orchestrator 142, the first scheduler 144, the first resource(s) 149, and the first security controller 161 are included in, correspond to, and/or otherwise is/are representative of the first edge platform 140. However, in some examples, one or more of the telemetry controller 130B, the first orchestrator 142, the first scheduler 144, the first resource(s) 149, and/or the first security controller 161 can be included in the edge environment 110 separate from the first edge platform 140. For example, the first orchestrator 142 can be connected to the cloud environment 105 and/or the endpoint environment 115 while being outside of the first edge platform 140. In other examples, one or more of the telemetry controller 130B, the first orchestrator 142, the first scheduler 144, the first resource(s) 149, and/or the first security controller 161 is/are separate devices included in the edge environment 110. Further, one or more of the telemetry controller 130B, the first orchestrator 142, the first scheduler 144, the first resource(s) 149, and/or the first security controller 161 can be included in the cloud environment 105 or the endpoint environment 115. For example, the first orchestrator 142 can be included in the endpoint environment 115. In some examples, the first scheduler 144 can be included in and/or otherwise integrated or combined with the first orchestrator 142.

In the example illustrated in FIG. 1, the telemetry controller 130C, the second orchestrator 152, the second scheduler 154, the second resource(s) 159, and the second security controller 162 are included in the second edge platform 150. However, in some examples, one or more of the telemetry controller 130C, the second orchestrator 152, the second scheduler 154, the second resource(s) 159, and/or the second security controller 162 can be included in the edge environment 110 separate from the second edge platform 150. For example, the second orchestrator 152 can be connected to the cloud environment 105 and/or the endpoint environment 115 while being outside of the second edge platform 150. In other examples, one or more of the telemetry controller 130C, the second orchestrator 152, the second scheduler 154, the second resource(s) 159, and/or the second security controller 162 is/are separate devices included in the edge environment 110. Further, one or more of the telemetry controller 130C, the second orchestrator 152, the second scheduler 154, the second resource(s) 159, and/or the second security controller 162 can be included in the cloud environment 105. For example, the second orchestrator 152 can be included in the cloud environment 105. Alternatively, in some examples disclosed herein, one or more of the telemetry controller 130C, the second orchestrator 152, the second scheduler 154, the second resource(s) 159, and/or the second security controller 162 can be included in the endpoint environment 115. For example, the second orchestrator 152 can be included in the endpoint environment 115. In some examples, the second scheduler 154 can be included in and/or otherwise integrated or combined with the second orchestrator 152.

In examples disclosed herein, the telemetry controller 130A-C is structured to establish the priority channel 155. In examples disclosed herein, the priority channel 155 is an example virtual computing channel structured to transmit telemetry data obtained by the telemetry controller 130A-C (e.g., telemetry data obtained responsive to a wish list) in a safe and efficient manner. In some examples disclosed herein, the telemetry data 136A-C (e.g., the local telemetry data) may be transmitted via the priority channel 155. Description of the priority channel 155 is described below, in connection with FIG. 2.

In the illustrated example of FIG. 1, the resources 149, 159 are invoked to execute a workload (e.g., an edge computing workload) obtained from the endpoint environment 115. For example, the resources 149, 159 can correspond to and/or otherwise be representative of an edge node or portion(s) thereof. For example, the telemetry controllers 130B-C, the executables 137, 139, the orchestrators 142, 152, the schedulers 144, 154, and/or, more generally, the edge platforms 140, 150 can invoke a respective one of the resources 149, 159 to execute one or more edge-computing workloads. In examples disclosed herein, the resources 149, 158 are a first means for resource invoking or a first resource invoking means, which are hardware.

In some examples, the resources 149, 159 are representative of hardware resources, virtualizations of the hardware resources, software resources, virtualizations of the software resources, etc., and/or a combination thereof. For example, the resources 149, 159 can include, correspond to, and/or otherwise be representative of one or more CPUs (e.g., multi-core CPUs), one or more FPGAs, one or more GPUs, one or more network interface cards (NICs), one or more vision processing units (VPUs), etc., and/or any other type of hardware or hardware accelerator. In such examples, the resources 149, 159 can include, correspond to, and/or otherwise be representative of virtualization(s) of the one or more CPUs, the one or more FPGAs, the one or more GPUs, the one more NICs, etc. In other examples, the orchestrators 142, 152, the schedulers 144, 154, the resources 149, 159, and/or, more generally, the edge platforms 140, 150, can include, correspond to, and/or otherwise be representative of one or more software resources, virtualizations of the software resources, etc., such as hypervisors, load balancers, OSes, VMs, etc., and/or a combination thereof.

In the illustrated example of FIG. 1, the edge platforms 140, 150 are connected to and/or otherwise in communication with each other and to the servers 112, 114, 116 in the cloud environment 105. The edge platforms 140, 150 can execute workloads on behalf of devices associated with the cloud environment 105, the edge environment 110, or the endpoint environment 115. The edge platforms 140, 150 can be connected to and/or otherwise in communication with devices in the environments 105, 110, 115 (e.g., the first server 112, the database 135, etc.) via a network such as the Internet (e.g., carrier-grade internet such as, for example, MQTT and IPv4 and/or public internet such as, for example, MQTT and IPv6). Additionally or alternatively, the edge platforms 140, 150 can communicate with devices in the environments 105, 110, 115 using any suitable wireless network including, for example, one or more wireless local area networks (WLANs), one or more cellular networks, one or more peer-to-peer networks (e.g., a Bluetooth network, a Wi-Fi Direct network, a vehicles-to-everything (V2X) network, etc.), one or more private networks, one or more public networks, etc. For example, the edge platforms 140, 150 can be connected to a cell tower included in the cloud environment 105 and connected to the first server 112 via the cell tower.

In the illustrated example of FIG. 1, the security controllers 161, 162 determine whether the resource(s) 149, 159 can be made discoverable to a workload and whether an edge platform (e.g., edge platforms 140, 150) is sufficiently trusted for assigning a workload to. In some examples, the security controllers 161, 162 negotiate key exchange protocols (e.g., TLS, etc.) with a workload source (e.g., an endpoint device, a server, an edge platform, etc.) to determine a secure connection between the security controller and the workload source. In some examples, the security controllers 161, 162 perform cryptographic operations and/or algorithms (e.g., signing, verifying, generating a digest, encryption, decryption, random number generation, secure time computations or any other cryptographic operations.).

The example security controllers 161, 162 may include a hardware root of trust (RoT). The hardware RoT is a system on which secure operations of a computing system, such as an edge platform, depend. The hardware RoT provides an attestable device (e.g., edge platform) identity feature, where such a device identity feature is utilized in a security controller (e.g., security controllers 161, 162). The device identify feature attests the firmware, software, and hardware implementing the security controller (e.g., security controllers 161, 162). For example, the device identify feature generates and provides a digest (e.g., a result of a hash function) of the software layers between the security controllers 161, 162 and the hardware RoT to a verifier (e.g., a different edge platform than the edge platform including the security controller). The verifier verifies that the hardware RoT, firmware, software, etc. are trustworthy (e.g., not having vulnerabilities, on a whitelist, not on a blacklist, etc.).

In some examples, the security controllers 161, 162 store cryptographic keys (e.g., a piece of information that determines the functional output of a cryptographic algorithm, such as specifying the transformation of plaintext into ciphertext) that may be used to securely interact with other edge platforms during verification. In some examples, the security controllers 161, 162 store policies corresponding to the intended use of the security controllers 161, 162. In some examples, the security controllers 161, 162 receive and verify edge platform security and/or authentication credentials (e.g., access control, single-sign-on tokens, tickets, and/or certificates) from other edge platforms to authenticate those other edge platforms or respond to an authentication challenge by other edge platforms. In examples disclosed herein, the security controllers 161, 162 are a means for security controlling or a security controlling means, which are hardware.

In the illustrated example of FIG. 1, the endpoint environment 115 includes an example first endpoint device 160, an example second endpoint device 165, an example third endpoint device 170, an example fourth endpoint device 175, an example fifth endpoint device 180, and an example sixth endpoint device 185. Alternatively, there may be fewer or more than the endpoint devices 160, 165, 170, 175, 180, 185 depicted in the endpoint environment 115 of FIG. 1.

In the illustrated example of FIG. 1, the endpoint devices 160, 165, 170, 175, 180, 185 are computing, sensing, actuating, displaying, and communicating devices. For example, one or more of the endpoint devices 160, 165, 170, 175, 180, 185 can be an Internet-enabled tablet, mobile handset (e.g., a smartphone), watch (e.g., a smartwatch), fitness tracker, headset, vehicle control unit (e.g., an engine control unit, an electronic control unit, etc.), IoT device, etc. In other examples, one or more of the endpoint devices 160, 165, 170, 175, 180, 185 can be a physical server (e.g., a rack-mounted server, a blade server, etc.).

In the illustrated example of FIG. 1, the first through third endpoint devices 160, 165, 170 are connected to the first edge platform 140. In FIG. 1, the fourth through sixth endpoint devices 175, 180, 185 are connected to the second edge platform 150. Additionally or alternatively, one or more of the endpoint devices 160, 165, 170, 175, 180, 185 may be connected to any number of edge platforms (e.g., the edge platforms 140, 150), servers (e.g., the servers 112, 114, 116), or any other suitable devices included in and/or otherwise associated with the environments 105, 110, 115 of FIG. 1. For example, the first endpoint device 160 can be connected to the edge platforms 140, 150 and to the second server 114.

In the illustrated example of FIG. 1, one or more of the endpoint devices 160, 165, 170, 175, 180, 185 can connect to one or more devices in the environments 105, 110, 115 via a network such as the Internet (e.g., carrier-grade internet such as, for example, MQTT and IPv4 and/or public internet such as, for example, MQTT and IPv6). Additionally or alternatively, one or more of the endpoint devices 160, 165, 170, 175, 180, 185 can communicate with devices in the environments 105, 110, 115 using any suitable wireless network including, for example, one or more WLANs, one or more cellular networks, one or more peer-to-peer networks, one or more private networks, one or more public networks, etc. In some examples, the endpoint devices 160, 165, 170, 175, 180, 185 can be connected to a cell tower included in one of the environments 105, 110, 115. For example, the first endpoint device 160 can be connected to a cell tower included in the edge environment 110, and the cell tower can be connected to the first edge platform 140.

Consistent with the examples provided herein, an endpoint device (e.g., one of the endpoint devices 160, 165, 170, 175, 180, 185) may be implemented as any type of endpoint component, device, appliance, or other thing capable of communicating as a producer or consumer of data. For example, a client compute platform can include a mobile phone, a laptop computer, a desktop computer, a processor platform in an autonomous vehicle, etc. In additional or alternative examples, a client compute platform can include a camera, a sensor, etc. Further, the label "platform," "node," and/or "device" as used in the environment 100 does not necessarily mean that such platform, node, and/or device operates in a client or slave role; rather, any of the platforms, nodes, and/or devices in the environment 100 refer to individual entities, platforms, nodes, devices, and/or subsystems which include discrete and/or connected hardware and/or software configurations to facilitate and/or use the edge environment 110.

In some examples, in response to a request to execute a workload from an endpoint device (e.g., the first endpoint device 160), an orchestrator (e.g., the first orchestrator 142) can communicate with at least one resource (e.g., the first resource(s) 149) and an endpoint device (e.g., the second endpoint device 165) to create a contract (e.g., a workload contract) associated with a description of the workload to be executed. The first endpoint device 160 can provide a task associated with the contract and the description of the workload to the first orchestrator 142, and the first orchestrator 142 can provide the task to a scheduler (e.g., the first scheduler 144). In examples disclosed herein, the first orchestrator 142 may utilize telemetry data to identify terms and/or risks in the event telemetry data is not identified and/or to form a graph of telemetry data that can be orchestrated and operated to meet maximum efficiency and effectiveness. The task can include the contract and the description of the workload to be executed. In some examples, the task can include requests to acquire and/otherwise allocate resources used to execute the workload.

In some examples, the orchestrators 142, 152 maintain records and/or logs of actions occurring in the environments 105, 110, 115. For example, the first resource(s) 149 can notify receipt of a workload description to the first orchestrator 142. One or more of the orchestrators 142, 152, the schedulers 144, 154, and/or the resource(s) 149, 159 can provide records of actions and/or allocations of resources to the orchestrators 142, 152. For example, the first orchestrator 142 can maintain or store a record of receiving a request to execute a workload (e.g., a contract request provided by the first endpoint device 160). In examples disclosed herein, the orchestrators 142, 152 are a means for orchestrating or an orchestrating means, which are hardware.

In some examples, the schedulers 144, 154 access a task received and/or otherwise obtained by the orchestrators 142, 152 and provide the task to one or more of the resource(s) 149, 159 to execute or complete. The example resource(s) 149, 159 can execute a workload based on a description of the workload included in the task. The example schedulers 144, 154 access a result of the execution of the workload from one or more of the resource(s) 149, 159 that executed the workload. The example schedulers 144, 154 provide the result to the device that requested the workload to be executed, such as the first endpoint device 160. In examples disclosed herein, the schedulers 144, 154 are a means for scheduling or a scheduling means, which are hardware.

Advantageously, an execution of a workload in the edge environment 110 can reduce costs (e.g., compute or computation costs, network costs, storage costs, etc., and/or a combination thereof) and/or processing time used to execute the workload. For example, the first endpoint device 160 can request the first edge platform 140 to execute a workload at a first cost lower than a second cost associated with executing the workload in the cloud environment 105. In other examples, an endpoint device, such as the first through third endpoint devices 160, 165, 170, can be nearer to (e.g., spatially or geographically closer, fewer network hops, etc.) and/or otherwise proximate to an edge platform, such as the first edge platform 140, than a centralized server (e.g., the servers 112, 114, 116) in the cloud environment 105. For example, the first edge platform 140 is spatially closer to the first endpoint device 160 than the first server 112. As a result, the first endpoint device 160 can request the first edge platform 140 to execute a workload, and the response time of the first edge platform 140 to deliver the executed workload result is lower than that can be provided by the first server 112 in the cloud environment 105.

In the illustrated example of FIG. 1, the telemetry controller 130A-C improves the distribution and execution of edge computing workloads (e.g., among the edge platforms 140, 150) based on the telemetry data 136A-C associated with at least one of the cloud environment 105, the edge environment 110, or the endpoint environment 115. While the telemetry controller 130A-C is illustrated as separate telemetry controllers 130A-C in the could environment 105 and the edge environment 110, in examples disclosed herein, the telemetry controller 130A-C may be implemented as a distributed telemetry controller accessible in the cloud environment 105 and/or the edge environment 110. In some examples, the telemetry controller 130A-C is implemented utilizing separate hardware on each of the edge platforms 140, 150 and/or the server 112. In such examples, though the hardware utilized to implement the telemetry controller 130A-C is different, the telemetry controller 130A-C remains logically consistent across the edge platforms 140, 150 and/or the server 112. In other examples disclosed herein, the telemetry controller 130A-C is implemented as a service across the edge platforms 140, 150 and/or the server 112. In such an example, the telemetry controller 130A-C is implemented using hardware and deployed as a logically consistent service across the edge platforms 140, 150 and/or the server 112. In examples disclosed herein, the telemetry controller 130A-C may respond to an example wish list (e.g., telemetry wish list) obtained by a consumer (e.g., a user of telemetry data, another edge platform, and/or any suitable computing device) to coordinate with the other telemetry controller(s) 130A-C to execute the wish list (e.g., telemetry wish list). In this manner, the telemetry controller 130A-C, being distributed, is structured to broker commitments and task execution among the cloud environment 105 and/or the edge environment 110 to execute the wish list (e.g., telemetry wish list). Further description of the telemetry controller 130A-C is explained in further detail below, in connection with FIG. 2.

In some examples, the first telemetry executable 137, when executed, generates the first telemetry data 136A. In some examples, the second telemetry executable 139, when executed, generates the second telemetry data 136B. In example operation, the first edge platform 140 can invoke a first composition(s), and/or, more generally, the first telemetry executable 137, to determine, generate, and/or obtain the first telemetry data 136A. For example, the first resource(s) 149 can include hardware resources that can be used for edge computing tasks by the endpoint devices 160, 165, 170, 175, 180, 185, where the hardware resources can include at least a multi-core CPU and a solid-state disc (SSD) drive. In such examples, the first compositions can include at least a first resource model corresponding to a core of the multi-core CPU and a second resource model corresponding to a partition of the SSD drive. The first compositions can determine the first telemetry data 136A, such as a quantity of gigahertz (GHz) at which the core can execute, a utilization of the core (e.g., the core is 25% utilized, 50% utilized, 75% utilized, etc.), a quantity of gigabytes (GB) of the SSD partition, a utilization of the SSD partition, etc., and/or a combination thereof.

In example operation, the second edge platform 150 can invoke a first composition(s), and/or, more generally, invoke the second telemetry executable 139, to determine, generate, and/or obtain the second telemetry data 136B. For example, the second resource(s) 159 can include hardware resources that can be used for edge computing tasks by the endpoint devices 160, 165, 170, 175, 180, 185, where the hardware resources can include at least a multi-core CPU and a solid-state disc (SSD) drive. In such examples, the second compositions can include at least a first resource model corresponding to a core of the multi-core CPU and a second resource model corresponding to a partition of the SSD drive. The second compositions can determine the second telemetry data 136B, such as a quantity of gigahertz (GHz) at which the core can execute, a utilization of the core (e.g., the core is 25% utilized, 50% utilized, 75% utilized, etc.), a quantity of gigabytes (GB) of the SSD partition, a utilization of the SSD partition, etc., and/or a combination thereof.

FIG. 2 depicts an example block diagram illustrating an example implementation of the telemetry controller 130A-C of FIG. 1. In FIG. 2, the telemetry controller 130A-C includes an example naming layer 202 including an example source manager 204 and an example directory 206, an example distributed metadata lake 208, an example credential manager 210, an example communication interface 212, and an example service manager 214. In the example of FIG. 2, the service manager 214 includes an example publisher 216, an example commitment manager 218, an example extractor 220, an example collector 222, an example indexer 224, and an example commitment determiner 226. In examples disclosed herein, the naming layer 202 is a means for identifying or an identifying means, which is hardware. In examples disclosed herein, the source manager 204 is a means for source managing, or a source managing means, which is hardware. In examples disclosed herein, the directory 206 is a means for identification information storing, or an identification information storing means, which is hardware. In examples disclosed herein, the distributed metadata lake 208 is a means for telemetry data storing, or a telemetry data storing means, which is hardware. In examples disclosed herein, the credential manager 210 is a means for credential managing, or a credential managing means. In examples disclosed herein, the communication interface 212 is a means for establishing, or an establishing means, which is hardware. In examples disclosed herein, the service manager 214 is a means for managing, or a managing means, which is hardware. In examples disclosed herein, the publisher 216 is a means for publishing, or a publishing means, which is hardware. In examples disclosed herein, the commitment manager 218 is a means for commitment managing, or a commitment managing means, which is hardware. In examples disclosed herein, the extractor 220 is a means for extracting telemetry data, or a telemetry data extracting means, which is hardware. In examples disclosed herein, the collector 222 is a means for collecting telemetry data, or a telemetry data collecting means, which is hardware. In examples disclosed herein, the indexer 224 is a means for indexing telemetry data, or a telemetry data indexing means, which is hardware. In examples disclosed herein, the commitment determiner 226 is a means determining, or a determining means, which is hardware.

In the example illustrated in FIG. 2, the naming layer 202 includes the source manager 204 and the directory 206. In operation, the naming layer 202 acts as a redirection point between edge platforms (e.g., the edge platforms 140, 150 of FIG. 1) in the edge environment 110 (FIG. 1), the cloud environment 105 (FIG. 1) and/or the endpoint environment 115 (FIG. 1). Further, the naming layer 202 forms a telemetry cataloging service. Description of the source manager 204 and the directory 206 is explained in further detail, below.

In the example illustrated in FIG. 2, the source manager 204 is structured to identify participants (e.g., the servers 112, 114, 116) in the cloud environment 105 and/or edge platforms in the edge environment 110 (e.g., the edge platforms 140, 150). Additionally or alternatively, the source manager 204 may identify participants the endpoint devices in the endpoint environment 115 (e.g., the endpoint device 160, 165, 170, 175, 180, 185) of FIG. 1. Further, the source manager 204 is structured to store identification information of the participants (e.g., the servers 112, 114, 116) in the cloud environment 105 and/or edge platforms in the edge environment 110 (e.g., the edge platforms 140, 150) of FIG. 1 in the directory 206. In examples disclosed herein, participants (e.g., the servers 112, 114, 116) in the cloud environment 105 and/or edge platforms in the edge environment 110 (e.g., the edge platforms 140, 150) may refer to any computing environment and/or component that generates telemetry data. For example, a CPU core may use performance counters and/or monitor parameters as telemetry data and, thus, be identified by the source manager 204. In another example, an operating system may instrument the operating system with audit log criteria that records various events that may have security, safety, performance or chain-of-custody reasons for creating a log entry and, thus, be identified by the source manager 204. In another example, the source manager 204 may identify any device that enters and/or exits a special state (e.g., secure mode, boot state, etc.) as a device capable of producing telemetry data. In yet another example, the source manager 204 may identify sensors (e.g., temperature sensors, time sensors, location sensors, direction sensors, etc.) as devices capable of producing telemetry data.

Additionally or alternatively, the source manager 204 may store identification information of the endpoint devices in the endpoint environment 115 (e.g., the endpoint device 160, 165, 170, 175, 180, 185) of FIG. 1 in the directory 206. In the event identification information regarding the participants (e.g., the servers 112, 114, 116) in the cloud environment 105 and/or edge platforms in the edge environment 110 (e.g., the edge platforms 140, 150) of FIG. 1 is not known, the source manager 204 may name new participants (e.g., generate a new name for an unknown participant). Additionally or alternatively, the source manager 204 may name new endpoint devices in the endpoint environment 115 (e.g., the endpoint device 160, 165, 170, 175, 180, 185) of FIG. 1 in the event identification information is not known. In some examples, the source manager 204 may obtain the name of the participants (e.g., the servers 112, 114, 116) in the cloud environment 105 and/or edge platforms in the edge environment 110 (e.g., the edge platforms 140, 150) via the directory 206. Additionally or alternatively, the source manager 204 may obtain the name of the endpoint devices in the endpoint environment 115 (e.g., the endpoint device 160, 165, 170, 175, 180, 185) of FIG. 1 via the directory 206. In some examples disclosed herein, the source manager 204 may discover sources of telemetry data. In this manner, the source manager 204 may include a discovery sub-system capable of analyzing a discovery protocol (e.g., a broadcast, a multicast discovery protocol, consulting a directory node to identify existence of telemetry sources, etc.) related to the unknown sources of telemetry data.

In examples disclosed herein, the source manager 204 is structured to link the name of the participants (e.g., the servers 112, 114, 116) in the cloud environment 105 and/or the edge platforms in the edge environment 110 (e.g., the edge platforms 140, 150) to the directory 206. Additionally or alternatively, the source manager 204 may link the name of the endpoint devices in the endpoint environment 115 (e.g., the endpoint device 160, 165, 170, 175, 180, 185) of FIG. 1 to the directory 206. Additionally, responsive to a commitment received, the source manager 204 is structured to link the name of the committed device to the directory 206.

Further, in examples disclosed herein, the source manager 204 determines whether a wish list (e.g., telemetry wish list) is obtained. For example, the source manager 204 may determine whether a wish list (e.g., telemetry wish list) is obtained from a consumer of any of the participants (e.g., the servers 112, 114, 116) in the cloud environment 105 and/or edge platforms in the edge environment 110 (e.g., the edge platforms 140, 150) to identify the potential participants (e.g., the participants in the edge cloud). Additionally or alternatively, the source manager 204 may determine whether a wish list (e.g., telemetry wish list) is obtained from a consumer of the endpoint devices in the endpoint environment 115 (e.g., the endpoint device 160, 165, 170, 175, 180, 185) of FIG. 1 to identify the potential participants (e.g., the participants in the edge cloud).

In some examples disclosed herein, the source manager 204 may implement networking concepts to enable sending an interest packet to components in the edge environment 110. In this manner, the source manager 204 may obtain routes (e.g., responses) from the components to provide telemetry data. The source manager 204 can then read and/or otherwise analyze the telemetry data using the supplied route. Furthermore a routing component may cache the telemetry data such that a second source manager in same edge environments 110 can utilize the cached telemetry data.

The directory 206 is structured to store data corresponding to both the names of Telemetry data items (TDIs) and components (e.g., any of the participants (e.g., the servers 112, 114, 116) in the cloud environment 105, edge platforms in the edge environment 110 (e.g., the edge platforms 140, 150), and/or endpoint devices in the endpoint environment 115 (e.g., the endpoint device 160, 165, 170, 175, 180, 185) of FIG. 1). In examples disclosed herein, TDIs refer to the atomic data that can be collected regarding a component. Further, in examples disclosed herein, components may refer to participants (e.g., the servers 112, 114, 116) in the cloud environment 105 and/or edge platforms in the edge environment 110 (e.g., the edge platforms 140, 150) of FIG. 1. Additionally or alternatively, components may refer to endpoint devices in the endpoint environment 115 (e.g., the endpoint device 160, 165, 170, 175, 180, 185) of FIG. 1. Components may register their particular TDI values so that a telemetry consumer of a TDI value can identify the components that may be capable of producing that TDI value. Likewise, the telemetry consumer efficiently identifies TDI values that are not expected for a given component (e.g., if that component has not registered particular TDI values). In examples disclosed herein, a TDI value includes metadata about its context.

In the event a new component is admitted into the edge environment 110 (e.g. via an Admission Control or suitable onboarding process), the component name is added to the directory 206 by the source manager 204. In examples disclosed herein, the directory 206 may be decentralized in the form of a blockchain, distributed cluster, and/or hierarchical service such as Domain Name Service (DNS) and/or and DNS-based Authentication of Named Entities (DANE). In examples disclosed herein, names of the components may be stored in the directory 206 in the form of sub-components responsive to static and/or dynamically applied configuration management techniques. For example, a rackscale server may be reconfigured with blades containing storage, processing, acceleration, networking, etc. In such an example, a rackscale component identifies in the directory as a component that includes of storage, processing, acceleration and networking sub-components. In examples disclosed herein, sub-components of a component may be further decomposed into further sub-components. In examples disclosed herein, the directory 206 stores data relating to elemental aspects of the edge environment 115 (e.g., CPU utilization aspects, CPU cycles, number of packets sent, etc.).

In the example illustrated in FIG. 2, the distributed metadata lake 208 is a distributed database that stores both raw (e.g., directly measured TDI values from components) information and/or filtered information from the service manager 214. In some examples, the distributed metadata lake 208 is referred to herein as a distributed database 208, a distributed data lake 208, etc. Further, the distributed database 208 is structured to associate data from participants to establish a view of telemetry data through the lens of the aggregation function. In examples disclosed herein, the aggregation function may be an artificial intelligence (AI) analytics engine or complex stochastic analysis (e.g., a Monte Carlo simulation). In an example operation, the distributed database 208 is structured to store data obtained from the service manager 214 based on a series of commitments made regarding the wish list (e.g., telemetry wish list). For example, a device in the service manager 214 (e.g., the extractor 220, the collector 222, and/or the indexer 224) may commit to obtaining, producing, filtering, extracting, and/or otherwise manipulating telemetry data to be stored in the distributed database 208. In this manner, the contents (e.g., telemetry data) stored in the distributed database 208 may be subject to removal upon the expiration of the commitment. In examples disclosed herein, the distributed database 208 is updated continuously and, thus, telemetry data may be transmitted in a timely manner. Further, the telemetry data stored in the distributed database 208 may be lossy and/or non-consistent. In this manner, the telemetry data stored in the distributed database 208 may be timestamped to ensure that the most recent telemetry data is utilized. Such examples enable accurate interpolation and/or extrapolation to obtain any possible missing intermediate and/or current versions of telemetry data, during all stages of processing.

In examples disclosed herein, the credential manager 210 is structured to determine whether credentials are needed for components when accessing data in the distributed database 208. In the event the credential manager 210 determines credentials are needed, the credential manager 210 generates credentials for each component when accessing data in the distributed database 208 to provide credentialed access. For example, because the edge environment 110 includes heterogenous edge platforms (e.g., the edge platforms 140, 150), the credential manager 210 ensures that the edge platforms (e.g., the edge platforms 140, 150) that are to access data stored in the distributed database 208 can access such data. For example, telemetry data from a first edge platform (e.g., the edge platform 140) may be accessible by a second edge platform (e.g., the edge platform 150) but not by a third edge platform (e.g., a third edge platform in the edge environment 110). The credential manager 210 identifies credentials of each of the edge platforms (e.g., the edge platform 140, 150). In examples disclosed herein, credentials of an edge platform (e.g., the edge platform 140, 150) may be generated responsive to a wish list (e.g., telemetry wish list). For example, if a first edge platform (e.g., the edge platform 140) requests telemetry data regarding a first computing device and a second computing device, the credentials manager may generate credentials enabling access by the first edge platform (e.g., the edge platform 140) to access the telemetry data associated with the first computing device and the second computing device.

Furthermore, the credential manager 210 may issue credentials to edge platforms (e.g., the edge platform 140, 150) corresponding to different level of privileges. For example, in the event information is available to one edge platform (e.g., the edge platform 140) at a detailed level (e.g., power and thermal information about a node), such an edge platform (e.g., the edge platform 140) may receive credentials corresponding to a high privilege. Further in such an example, such information may be available to a second edge platform (e.g., the edge platform 150) in a relativized form and/or aggregated form. Thus, such a second edge platform (e.g., the edge platform 150) may receive credentials corresponding to a lower privilege. Once a credential is provided to an edge platform (e.g., the edge platform 140, 150) by the credential manager 210, such an edge platform (e.g., the edge platform 140, 150) may utilize the existing credential to speed up access to data in the event the edge platform (e.g., the edge platform 140, 150) is to access the same data.

In examples disclosed herein, the credential manager 210 establishes components as either a source of telemetry data or a destination of telemetry data. In such a manner, the sources and/or destinations of telemetry data can, responsive to credentials being issued, communicate securely (e.g., with integrity and/or confidentiality).

In the example of FIG. 2, the communication interface 212 determines whether to establish the priority channel 155 of FIG. 1. In the event the communication interface 212 determines to establish the priority channel, the communication interface 212 establishes the priority channel 155 of FIG. 1 for the edge platforms (e.g., the edge platform 140, 150) in the edge environment 110. In examples disclosed herein, the communication interface 212 establishes the priority channel 155 as a virtual communication channel. Additionally or alternatively, in other examples disclosed herein, the communication interface 212 may establish the priority channel 155 has a physical communication channel (e.g., wired ethernet connection, etc.).

In an example operation, the communication interface 212 communicates with surrounding edge platforms (e.g., the edge platform 140, 150) to ensure that telemetry data can be transmitted to corresponding components in a safe and efficient manner. For example, the communication interface 212 establishes the priority channel 155 to facilitate transmission of telemetry data in an isolated manner across the priority channel 155. Further in such an example, rather than transmitting telemetry data across a public internet connection, telemetry data may be communicated across the priority channel 155. In examples disclosed herein, the credential manager 210 establishes the priority channel 155 as an overlay network that operates according to a quality of service (QoS) guarantee. The communication interface 212 initiates establishment of the priority channel 155 by configuring a portion of bandwidth from a communication connection to the server 112 (FIG. 1) (e.g., a communication connection with low performance and high resiliency) as a first bandwidth portion of the priority channel 155. As used herein, a communication connection refers to any suitable wired and/or wireless communication method and/or apparatus structured to facilitate transmission of data. Further, the communication interface 212 configures a portion of bandwidth from the carrier-grade internet connection between edge platforms (e.g., the edge platform 140, 150) as a second bandwidth portion of the priority channel 155. In this manner, the communication interface 212 may combine the first portion (e.g., the server connection) with the second portion (e.g., the carrier-grade internet) when telemetry data is to be transmitted. For example, the communication interface 212 may establish the first and second bandwidth portions as segments of bandwidth that are to be used to facilitate telemetry data (e.g., segments of bandwidth that make up the priority channel 155). In this manner, the telemetry data can be transmitted at a reliable, consistent rate to all sources and/or consumers. Further, such a priority channel 155 enables edge platforms (e.g., the edge platform 140, 150) that implement the distributed database 208 to make decisions based on synchronized telemetry data accessible by the authorized users.

In the example of FIG. 2, the service manager 214 is structured to determine whether a wish list (e.g., telemetry wish list) is published. For example, a different telemetry controller (e.g., the telemetry controller 130B) may receive and publish a wish list (e.g., telemetry wish list). In such a manner, the service manager 214 located in the remaining telemetry controllers (e.g., the telemetry controller 130A, 130C) determine whether the wish list (e.g., telemetry wish list) is published. In the event the service manager 214 determines a wish list (e.g., telemetry wish list) is not published, the service manager 214 continues to wait. Alternatively, in the event the service manager determines a wish list (e.g., telemetry wish list) is published, the extractor 220 parses the wish list (e.g., telemetry wish list) to identify the requested telemetry data and associated tasks. Further, the service manger 214 is operable to process a commitment. Description of commitment processing is explained in further detail below.

In the example of FIG. 2, the publisher 216 is structured to publish the wish list (e.g., telemetry wish list) to various components. When publishing the wish list (e.g., telemetry wish list), the publisher 216 may also publish advertisements relating to one or more commitments to be assigned to fulfil the wish list (e.g., telemetry wish list). In examples disclosed herein, the commitments include a time period and data scope. As used herein, a time period in a commitment refers to a period of time (e.g., ten minutes, one week, etc.) in which telemetry data is requested and/or accessible. Accordingly, acceptance of commitments to provide telemetry data are likewise published by the publisher 216. In examples disclosed herein, telemetry data collected by the telemetry controller 130A-C may be published by the publisher 216 (e.g., the components may be notified of the available telemetry data). In some examples disclosed herein, telemetry data may be included in the distributed database 208 via the naming layer 202 without explicit publication or notification by the publisher 216. In such an example, the telemetry data may be timestamped to ensure consumers of the telemetry data can identify the relevancy of the telemetry data (e.g., the age of the telemetry data).

In the example of FIG. 2, the commitment manager 218 is structured to determine whether a commitment from another telemetry controller 130A-C and/or the same telemetry controller 130A-C is received. In the event the commitment manger 218 determines a commitment is not received, the commitment manager 218 continues to wait. In the event a commitment is not received (e.g., not accepted) from any of the components, the commitment manager 218 may communicate with the source manager 204 to obtain a back-up commitment and/or historical listing of the telemetry data. The back-up may be obtained from a component operable to provide telemetry data in the event commitments are not obtained, received, and/or otherwise accepted. Such a back-up ensures the amount of telemetry data obtained is non-zero.

Alternatively, in the event the commitment manager 218 determines a commitment is received, the commitment manager 218 communicates an indication to the publisher 216 to publish the commitment. The commitment manager 218 further determines whether all commitments associated with a wish list (e.g., telemetry wish list) are received. In the event the commitment manager 218 determines all commitments are not received, the commitment manager 218 may continue to wait. In addition, responsive to the commitment manager 218 determining all commitments are not received, the example commitment determiner 226 may determine whether there is an available commitment that can be processed by the service manager 214 of the respective telemetry controller 130A-C.

In the example of FIG. 2, the extractor 220, responsive to a wish list (e.g., telemetry wish list) being received and/or published, parses the wish list (e.g., telemetry wish list) to identify the requested telemetry data and/or tasks. Additionally or alternatively, in the event the commitment determiner 226 determines the extractor 220 can commit to implement a requested task in the wish list (e.g., telemetry wish list), the extractor 220 may process the commitment. For example, a wish list (e.g., telemetry wish list) may include a task to extract specified telemetry data. In this manner, the extractor 220 may commit to processing such a commitment (e.g., executing the task). In examples disclosed herein, the extractor 220 may, when processing a commitment, extract the relevant telemetry data. For example, the extractor may extract the telemetry data from the distributed database 208 and/or any suitable database (e.g., the directory 206, the database 135 (FIG. 1), and/or the EP database 148, 158 local to the edge platform 140, 150, respectively). Further, the extractor 220 may determine whether aggregation of the telemetry data is needed. In the event the extractor 220 determines aggregation of the telemetry data is needed, the extractor 220 may aggregate the previously extracted telemetry data. In examples disclosed herein, aggregations may occur in the event the telemetry data is received in a non-desired format (e.g., telemetry data obtained from heterogenous components), in the event the telemetry data can be combined, and/or in the event a task in the wish list (e.g., telemetry wish list) indicates to aggregate data. In such an example, the extractor 220 may aggregate the telemetry data into an appropriate format. In examples disclosed herein, the extractor 220 may aggregate data responsive to the processing of a commitment.

In the example of FIG. 2, the collector 222, responsive to the commitment determiner 226 determining the collector 222 can commit to a task, processes such a commitment. In examples disclosed herein, the collector 222 may perform telemetry collection by identifying the telemetry data to be collected and subsequently collecting such telemetry data. In examples disclosed herein, the collector 222 may store such collected telemetry data in the distributed database 208. In an example operation, in the event the collector 222 commits to collecting telemetry data about utilization, the collector 222 identifies all sources that can provide such telemetry data and collect such telemetry data. In examples disclosed herein, the collector 222 may obtain telemetry data from surrounding components at any suitable time (e.g., within the next five minutes, in five minutes, etc.).

In the example of FIG. 2, the indexer 224, responsive to the commitment determiner 226 determining the indexer 224 can commit to a task, processes such a commitment. In examples disclosed herein, the indexer 224 may index and/or search data stored in the distributed database 208. In examples disclosed herein, the indexer 224 may perform filtering on the data stored in the distributed database 208.

In examples disclosed herein, the commitment determiner 226 is operable in connection with any of the publisher 216, the extractor 220, the collector 222, and/or the indexer 224. In examples disclosed herein, the commitment determiner 226 is structured to determine whether any of the publisher 216, the extractor 220, the collector 222, and/or the indexer 224 can execute (e.g., whether any of the publisher 216, the extractor 220, the collector 222, and/or the indexer 224 can accept a commitment) a task in the wish list (e.g., telemetry wish list). In this manner, the commitment determiner 226 analyzes the tasks in the wish list (e.g., telemetry wish list) to identify the commitments to be accepted. Further, the commitment determiner 226 determines whether it is viable for any of the publisher 216, the extractor 220, the collector 222, and/or the indexer 224 to accept a commitment. In examples disclosed herein, the commitment determiner 226 may determine a task in the wish list (e.g., telemetry wish list) is viable to be accepted by a component (e.g., any of the publisher 216, the extractor 220, the collector 222, and/or the indexer 224) in the event the commitment determiner 226 determines such a component is capable (e.g., has the necessary processing resources, is available, etc.) of executing the task associated with the commitment. In the event the commitment determiner 226 determines it is not viable for any of the publisher 216, the extractor 220, the collector 222, and/or the indexer 224 to accept a commitment, the commitment manager 218 determines whether there is another commitment available to analyze.

In examples disclosed herein, in the event the commitment determiner 226 determines that it is viable for any of the publisher 216, the extractor 220, the collector 222, and/or the indexer 224 to accept a commitment, the commitment determiner 226 further determines whether such a viable commitment has already been accepted by another component. For example, the commitment determiner 226 may determine that the extractor 220 is capable of accepting a commitment relating to extracting data. In such an example, the commitment determiner 226 identifies whether any other component (e.g., another extractor located in a separate telemetry controller) has already accepted such a commitment. In the event the commitment determiner 226 determines that another component has already accepted such a commitment, the commitment manager 218 determiners whether there is another commitment to analyze.

Alternatively, in the event the commitment determiner 226 determines that another component has not accepted such a commitment (e.g., the commitment is available to be accepted), the commitment determiner 226 transmits an indication of the accepted commitment to the source manager 204 and to the publisher 216. In response, the component determined to execute the commitment (e.g., any of the publisher 216, the extractor 220, the collector 222, and/or the indexer 224) processes the commitment.

In examples disclosed herein, the commitment determiner 226 is structured to determine whether the time period associated with the commitment has expired. In the event the commitment determiner 226 determines the time period associated with the commitment has expired, the commitment manager 218 determines whether there is another commitment to analyze. Alternatively, in the event the commitment determiner 226 determines the time period has not expired, the component determined to execute the commitment (e.g., any of the publisher 216, the extractor 220, the collector 222, and/or the indexer 224) continues to process the commitment. In examples disclosed herein, the commitment determiner 226 may, upon determination that the time period has not expired, instruct the commitment manager 218 to determine whether there is another commitment to analyze. In such an example, the commitment determiner 226 may direct acceptance of multiple commitments without waiting for the time to expire in a previously accepted commitment.

While an example manner of implementing the telemetry controller 130A-C of FIG. 1 is illustrated in FIG. 2, one or more of the elements, processes and/or devices illustrated in FIG. 2 may be combined, divided, rearranged, omitted, eliminated and/or implemented in any other way. Further, the example naming layer 202, the example source manager 204, the example directory 206, the example distributed database 208, the example credential manager 210, the example communication interface 212, the example service manager 214, the example publisher 216, the example commitment manager 218, the example extractor 220, the example collector 222, the example indexer 224, and/or, more generally, the example telemetry controller 130A-C of FIGS. 1 and/or 2 may be implemented by hardware, software, firmware and/or any combination of hardware, software and/or firmware. Thus, for example, any of the example naming layer 202, the example source manager 204, the example directory 206, the example distributed database 208, the example credential manager 210, the example communication interface 212, the example service manager 214, the example publisher 216, the example commitment manager 218, the example extractor 220, the example collector 222, the example indexer 224, and/or, more generally, the example telemetry controller 130A-C of FIGS. 1 and/or 2 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). At least one of the example naming layer 202, the example source manager 204, the example directory 206, the example distributed database 208, the example credential manager 210, the example communication interface 212, the example service manager 214, the example publisher 216, the example commitment manager 218, the example extractor 220, the example collector 222, the example indexer 224 is/are hereby expressly defined to include a non-transitory computer readable storage device or storage disk such as a memory, a digital versatile disk (DVD), a compact disk (CD), a Blu-ray disk, etc. including the software and/or firmware. Further still, the example telemetry controller 130A-C of FIGS. 1 and/or 2 may include one or more elements, processes and/or devices in addition to, or instead of, those illustrated in FIG. 2, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

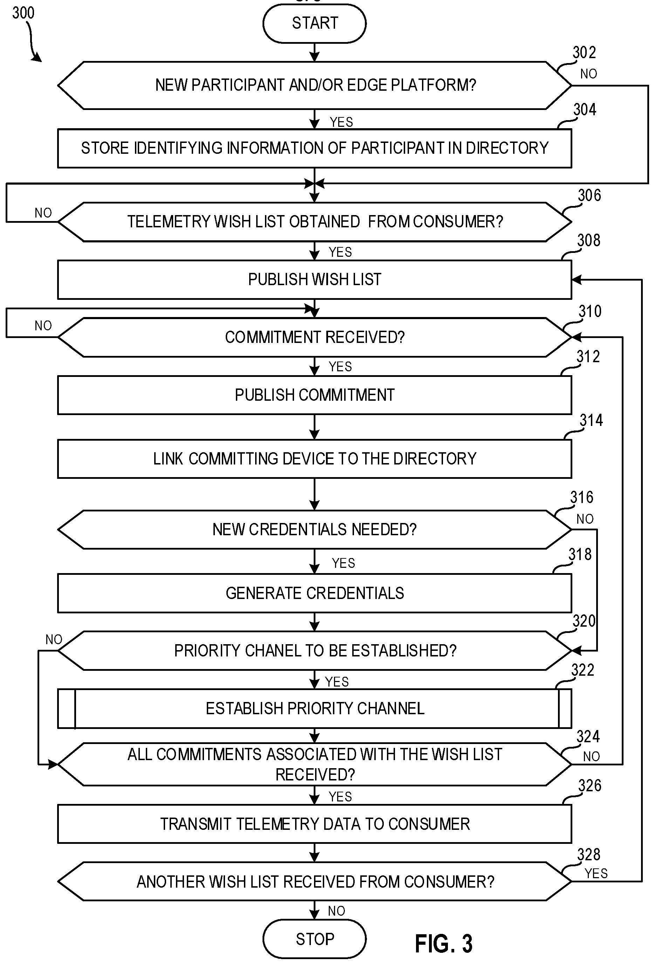

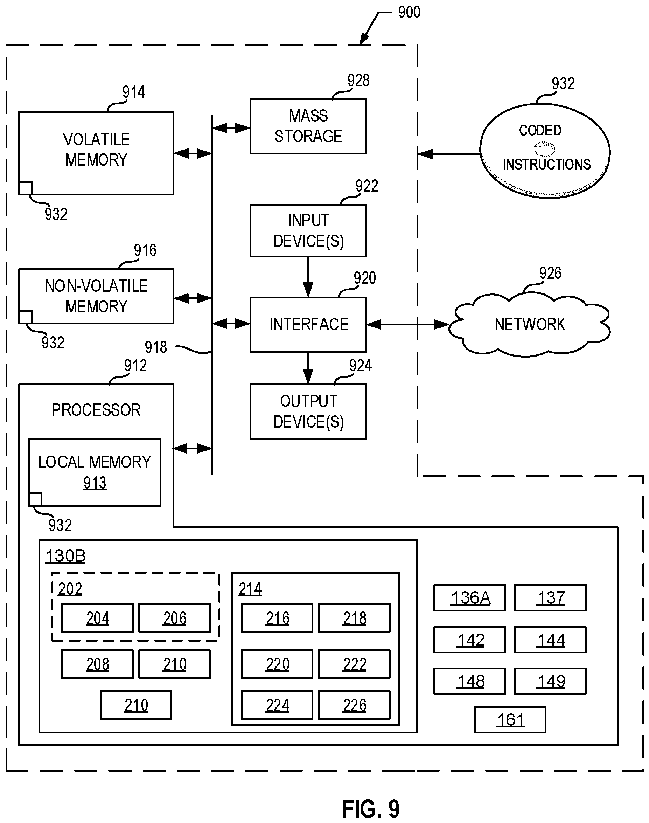

Flowchart representative of example hardware logic, machine readable instructions, hardware implemented state machines, and/or any combination thereof for implementing the telemetry controller 130A-C of FIGS. 1 and/or 2 are shown in FIGS. 3, 4, 5, 6, 7, and/or 8. The machine readable instructions may be one or more executable programs or portion(s) of an executable program for execution by a computer processor such as the processor 912 shown in the example processor platform 900 discussed below in connection with FIG. 9. The program may be embodied in software stored on a non-transitory computer readable storage medium such as a CD-ROM, a floppy disk, a hard drive, a DVD, a Blu-ray disk, or a memory associated with the processor 912, but the entire program and/or parts thereof could alternatively be executed by a device other than the processor 912 and/or embodied in firmware or dedicated hardware. Further, although the example program is described with reference to the flowcharts illustrated in FIGS. 3, 4, 5, 6, 7, and/or 8, many other methods of implementing the example telemetry controller 130A-C may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware.

The machine readable instructions described herein may be stored in one or more of a compressed format, an encrypted format, a fragmented format, a compiled format, an executable format, a packaged format, etc. Machine readable instructions as described herein may be stored as data (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement a program such as that described herein.

In another example, the machine readable instructions may be stored in a state in which they may be read by a computer, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, the disclosed machine readable instructions and/or corresponding program(s) are intended to encompass such machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 3, 4, 5, 6, 7, and/or 8 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIG. 3 is a flowchart representative of a process 300 that may be implemented using logic or machine readable instructions that may be executed to implement the telemetry controller 130A-C of FIGS. 1 and/or 2 when a wish list (e.g., telemetry wish list) is obtained from a consumer. At block 302, the source manager 204 identifies whether there are new participants (e.g., the servers 112, 114, 116) in the cloud environment 105 and/or edge platforms in the edge environment 110 (e.g., the edge platforms 140, 150) of FIG. 1. In some examples, the control of 302 may include identifying whether there are additional endpoint devices in the endpoint environment 115 (e.g., the endpoint device 160, 165, 170, 175, 180, 185) of FIG. 1. In the event the source manager 204 identifies there is a new participant (e.g., the servers 112, 114, 116) in the cloud environment 105 and/or edge platform in the edge environment 110 (e.g., the edge platforms 140, 150) (e.g., the control of block 302 returns a result of YES), the source manager 204 stores identifying information (e.g., naming information) in the directory 206. (Block 304). In the event the source manager 204 does not identify a new participant (e.g., the servers 112, 114, 116) in the cloud environment 105 and/or edge platform in the edge environment 110 (e.g., the edge platforms 140, 150) (e.g., the control of block 302 returns a result of NO), control proceeds to block 306.

At block 306, the source manager 204 determines whether a wish list (e.g., telemetry wish list) is obtained. (Block 306). For example, an edge consumer task, application, and/or microservice may advertise a wish list (e.g., telemetry wish list) to the edge platforms requesting data for use in a further computing process. For example, the source manager 204 may determine whether a wish list (e.g., telemetry wish list) is obtained from a consumer of any of the participants (e.g., the servers 112, 114, 116) in the cloud environment 105 and/or edge platforms in the edge environment 110 (e.g., the edge platforms 140, 150) of FIG. 1. In the event the source manager 204 determines a wish list (e.g., telemetry wish list) is not obtained (e.g., the control of block 306 returns a result of NO), control waits. Alternatively, in the event the source manager 204 determines a wish list (e.g., telemetry wish list) is obtained (e.g., the control of block 306 returns a result of YES), the publisher 216 publishes the wish list (e.g., telemetry wish list) to various components. (Block 308).

At block 310, the commitment manager 218 determines whether a commitment from another telemetry controller 130A-C and/or the same telemetry controller 130A-C is received. (Block 310). In the event the commitment manger 218 determines a commitment is not received (e.g., the control of block 310 returns a result of NO), the commitment manager 218 continues to wait. In some examples disclosed herein, the commitment manager 218 may not wait indefinitely and, thus, the commitment manger 218 may request the service manager 214 to provide a commitment from a backup provider. For example, the service manager 214 may have access to backup providers (e.g., components that have previously committed to similar tasks, components that can provide some or all of the commitment, etc.) that are capable of committing. Alternatively, in the event the commitment manager 218 determines a commitment is received (e.g., the control of block 310 returns a result of YES), the publisher 216 publishes the commitment. (Block 312).

At block 314, the source manager 204 links the name of the one or more committed devices to the directory 206. (Block 314). At block 316, the credential manager 210 determines whether credentials are needed for components when accessing data in the distributed database 208. (Block 316). In the event the credential manager 210 determines credentials are not needed (e.g., the control of block 316 returns a result of NO), control proceeds to block 320. Alternatively, in the event the credential manager 210 determines credentials are needed (e.g., the control of block 316 returns a result of YES), the credential manager 210 generates credentials for the component when accessing data in the distributed database 208. (Block 318).

At block 320, the communication interface 212 determines whether to establish the priority channel 155 of FIG. 1. (Block 320). In the event the communication interface 212 determines not to establish the priority channel 155 (e.g., the control of block 320 returns a result of NO), control proceeds to block 324. Alternatively, in the event the communication interface 212 determines to establish the priority channel (e.g., the control of block 320 returns a result of YES), the communication interface 212 establishes the priority channel 155 of FIG. 1 for the edge platforms (e.g., the edge platform 140, 150) in the edge environment 110. (Block 322). Description of the instruction in block 322 is explained in further detail below.

At block 324, the commitment manager 218 determines whether all commitments associated with a wish list (e.g., telemetry wish list) are received. (Block 324). In the event the commitment manager 218 determines all commitments are not received (e.g., the control of block 324 returns a result of NO), control returns to block 310. Alternatively, responsive to the control of block 324 returning a result of NO, the commitment manager 218 may continue to wait.

In the event the commitment manager 218 determines all commitments are received (e.g., the control of block 324 returns a result of YES), the credential manager 210 transmits the telemetry data to the consumer. (Block 326). Further, the source manager 204 determines whether an additional wish list (e.g., telemetry wish list) is obtained. (Block 328). In the event the source manager 204 determines an additional wish list (e.g., telemetry wish list) is obtained (e.g., the control of block 328 returns a result of YES), control returns to block 308. Alternatively, in the event the source manager 204 determines an additional wish list (e.g., telemetry wish list) is not obtained (e.g., the control of block 328 returns a result of NO), the process 300 stops.

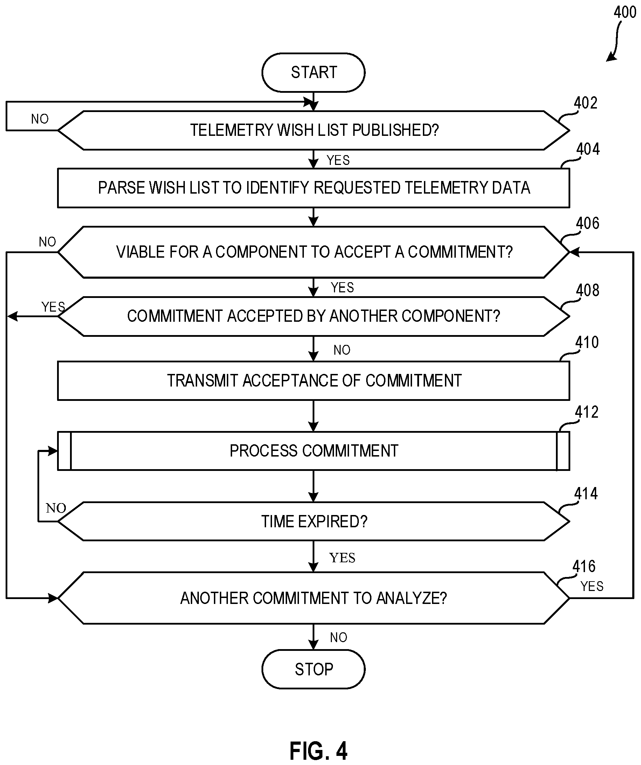

FIG. 4 is a flowchart representative of a process 400 that may be implemented using logic or machine readable instructions that may be executed to implement the telemetry controller 130A-C of FIGS. 1 and/or 2 when a wish list (e.g., telemetry wish list) is published. At block 402, the service manager 214 determines whether a wish list (e.g., telemetry wish list) is published. (Block 402). For example, a different telemetry controller (e.g., the telemetry controller 130B) may receive and publish a wish list (e.g., telemetry wish list). In such a manner, the service manager 214 located in the remaining telemetry controllers (e.g., the telemetry controller 130A, 130C) determine whether the wish list (e.g., telemetry wish list) is published. In the event the service manager 214 determines a wish list (e.g., telemetry wish list) is not published (e.g., the control of block 402 returns a result of NO), the service manager 214 continues to wait. Alternatively, in the event the service manager determines a wish list (e.g., telemetry wish list) is published (e.g., the control of block 402 returns a result of YES), the extractor 220 parses the wish list (e.g., telemetry wish list) to identify the requested telemetry data and associated tasks. (Block 404).

At block 406, the commitment determiner 226 determines whether it is viable for a component (e.g., any of the publisher 216, the extractor 220, the collector 222, and/or the indexer 224 because, for example, the component of interest does not have the processing capabilities or is available) to accept a commitment. (Block 406). In the event the commitment determiner 226 determines it is not viable for a component (e.g., any of the publisher 216, the extractor 220, the collector 222, and/or the indexer 224) to accept a commitment (e.g., the control of block 406 returns a result of NO), control proceeds to block 416. Alternatively, in the event the commitment determiner 226 determines that it is viable for a component (e.g., any of the publisher 216, the extractor 220, the collector 222, and/or the indexer 224) to accept a commitment (e.g., the control of block 406 returns a result of YES), the commitment determiner 226 further determines whether such a viable commitment has already been accepted by another component. (Block 408). For example, the commitment determiner 226 may determine that the extractor 220 is capable of accepting a commitment relating to extracting data. In such an example, the commitment determiner 226 identifies whether any other component (e.g., another extractor located in a separate telemetry controller) has already accepted such a commitment.

In the event the commitment determiner 226 determines that another component has already accepted such a commitment (e.g., the control of block 408 returns a result of YES), control proceeds to block 416. Alternatively, in the event the commitment determiner 226 determines that another component has not accepted such a commitment (e.g., the control of block 408 returns a result of NO), the commitment determiner 226 transmits an indication of the accepted commitment to the source manager 204 and to the publisher 216. (Block 410).

In response to the execution of the control illustrated in block 410, the component determined to execute the commitment (e.g., any of the publisher 216, the extractor 220, the collector 222, and/or the indexer 224) processes the commitment. (Block 412). Description of the instruction illustrated in block 412 is explained in further detail below.

At block 414, the commitment determiner 226 is structured to determine whether the time period associated with the commitment has expired. (Block 414). In the event the commitment determiner 226 determines the time period associated with the commitment has expired (e.g., the control of block 414 returns a result of YES), control proceeds to block 416. Alternatively, in the event the commitment determiner 226 determines the time period has not expired (e.g., the control of block 414 returns a result of NO), the component determined to execute the commitment (e.g., any of the publisher 216, the extractor 220, the collector 222, and/or the indexer 224) continues to process the commitment. (Block 412).

At block 416, the commitment manager 218 determines whether there is another commitment available to analyze. (Block 416). In the event the commitment manager 218 determines there is another commitment to analyze (e.g., the control of block 416 returns a result of YES), control returns to block 406. Alternatively, in the event the commitment manager 218 determines there is not another commitment to analyze (e.g.., the control of block 416 returns a result of NO), the process 400 stops.

In examples disclosed herein, the processes 300 and 400 of FIGS. 3 and 4 may be applied as control to be executed using a variety of data-level networking mechanisms. For example, in the event telemetry data is implemented in an NDN, control may include the service manager 210 sending an interest packet, obtaining a response regarding the execution and/or completion of the interest packet, and utilizing the response to route to the responders to fulfil the interest packet to obtain telemetry data. In such an example, the telemetry data may be cached by the service manager 214 for subsequent requests. In an alternate example, the telemetry controller 130A-C may be implemented in a RESTful request and/or response network. In the event the telemetry controller 130A-C is implemented in a RESTful request and/or response network, the service manager 214 may execute RESTful interactions such as, for example, CREATE, GET<read>, PUT<update>, DEL, NOTIFY, etc., to broker telemetry data.

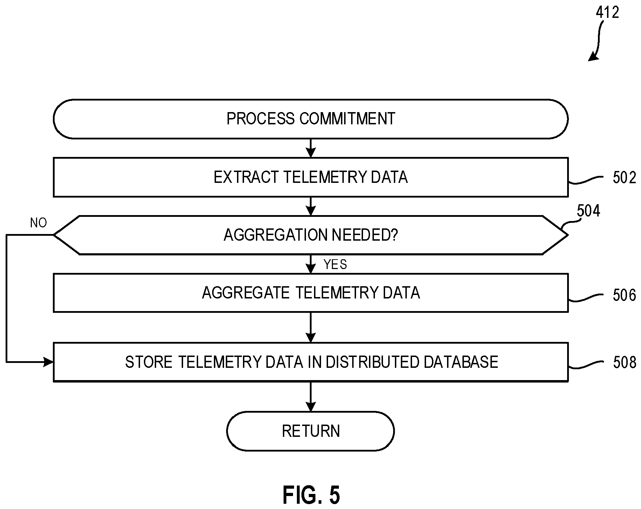

FIG. 5 is a flowchart representative of a process that may be implemented using logic or machine readable instructions that may be executed to the extractor 220 of FIG. 2 to process a commitment by extracting and/or aggregating telemetry data. For example, the process of FIG. 5 may be executed by the extractor 220 to execute the instructions 412 of FIG. 4 in the event the commitment is for extraction.

In FIG. 5, in the event the commitment determiner 226 determines the extractor 220 can commit to implement a requested task in the wish list (e.g., telemetry wish list), the extractor 220 may process the commitment. For example, a wish list (e.g., telemetry wish list) may include a task to extract specified telemetry data. At block 502, the extractor 220 extracts the relevant telemetry data. (Block 502). For example, the extractor may extract the telemetry data from the distributed database 208 and/or any suitable database (e.g., the directory 206, the database 135 (FIG. 1), and/or the EP database 148, 158 local to the edge platform 140, 150, respectively). Further, the extractor 220 determines whether aggregation of the telemetry data is needed. (Block 504). In the event the extractor 220 determines aggregation of the telemetry data is needed (e.g., the control of block 504 returns a result of YES), the extractor 220 may aggregate the previously extracted telemetry data. (Block 506). In such an example, the extractor 220 may aggregate the telemetry data into an appropriate format (e.g., a client specific format, summary statistics, any suitable aggregation format for telemetry data, etc.). Alternatively, in response to the extractor 220 determining aggregation of the telemetry data is not needed (e.g., the control of block 504 returns a result of NO), control proceeds to block 508.

At block 508, the extractor 220 stores the telemetry data in the distributed database 208. (Block 508). The process then returns to block 414 of FIG. 4 responsive to the execution of the control in block 508.

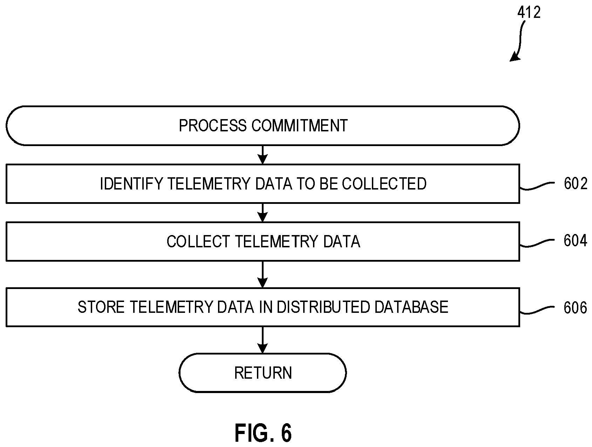

FIG. 6 is a flowchart representative of a process that may be implemented using logic or machine readable instructions that may be executed to implement the collector 222 of FIG. 2 to process a commitment by collecting telemetry data. For example, the process of FIG. 6 may be executed by the collector 222 to execute the instructions 412 of FIG. 4 in the event the commitment is for collection.

In the example of FIG. 6, the collector 222 identifies the telemetry data to be collected. (Block 602). In response to identifying the telemetry data to be collected, the collector 222 collects the telemetry data. (Block 604).

At block 606, the collector 222 stores the collected telemetry data in the distributed database 208. (Block 606). The process then returns to block 414 of FIG. 4 responsive to the execution of the control in block 606.

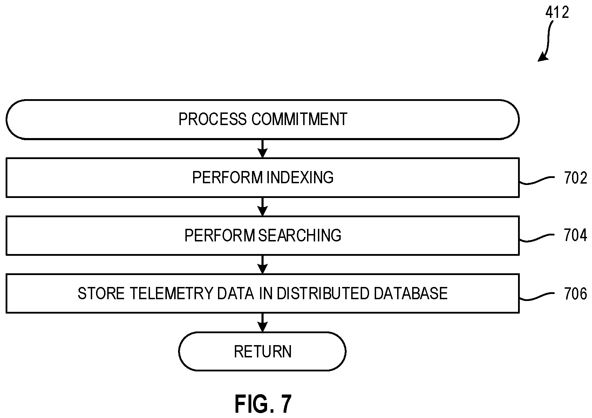

FIG. 7 is a flowchart representative of a process that may be implemented using logic or machine readable instructions that may be executed to implement the indexer 224 of FIG. 2 to process a commitment by indexing and/or searching telemetry data. For example, the process of FIG. 7 may be executed by the indexer 224 to execute the instructions 412 of FIG. 4 in the event the commitment is for indexing.

In FIG. 7, the indexer 224 performs indexing. (Block 702). For example, the indexer 224 may index data stored in the distributed database 208. Further, the indexer 224 may perform searching. (Block 704). For example, the indexer 224 may search for specified telemetry data stored in the distributed database 208. In response to the execution of the control illustrated in block 704, the indexer 224 stores telemetry data (e.g., the indexed and/or searched telemetry data) in the distributed database. (Block 706). The process then returns to block 414 of FIG. 4 responsive to the execution of the control in block 706.

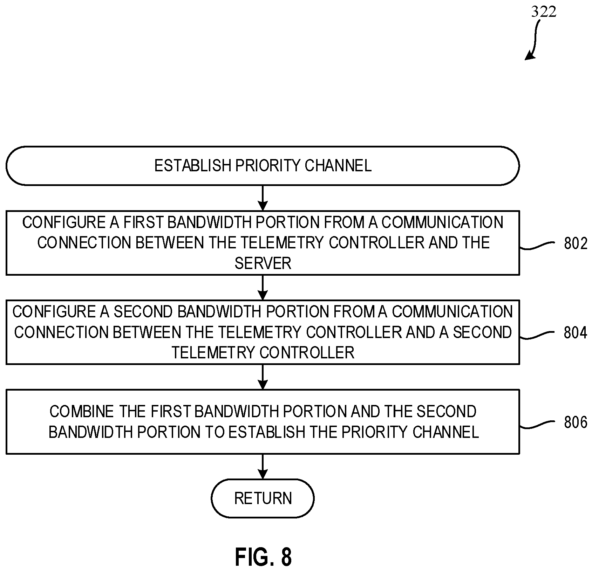

FIG. 8 is a flowchart representative of a process that may be implemented using logic or machine readable instructions that may be executed to implement the communication interface 212 of FIG. 2 to establish the priority channel 155 of FIG. 1. The process of FIG. 8 illustrates example instructions to execute the control of block 322 of FIG. 3.

In FIG. 8, the communication interface 212 configures a first bandwidth portion from a communication connection to the server 112 (FIG. 1) (e.g., a channel with low performance and high resiliency) as a first portion of the priority channel 155. (Block 802). Additionally, the communication interface 212 configures a second bandwidth portion from the communication connection between telemetry controllers 130A-C (e.g., the edge platform 140, 150) as a second portion of the priority channel 155. (Block 984). In response, the communication interface 212 combines the first portion (e.g., the server connection) with the second portion (e.g., the carrier-grade internet). (Block 806). Control then returns to block 324 of FIG. 3 responsive to the execution of the control in block 806.

FIG. 9 is a block diagram of an example processor platform 900 structured to execute the instructions of FIGS. 3, 4, 5, 6, 7, and/or 8 to implement the telemetry controller 130B of the first edge platform 140 of FIGS. 1 and/or 2. While the processor platform 900 of FIG. 9 is described in connection with the telemetry controller 130B of the first edge platform 140 of FIGS. 1 and/or 2, any suitable telemetry controller 130A-C may be implemented. For example, the processor platform 900 may be structured to execute the instructions of FIGS. 3, 4, 5, 6, 7, and/or 8 to implement the telemetry controller 130C of the second edge platform 150 of FIGS. 1 and/or 2. The processor platform 900 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset or other wearable device, or any other type of computing device.

The processor platform 900 of the illustrated example includes a processor 912. The processor 912 of the illustrated example is hardware. For example, the processor 912 can be implemented by one or more integrated circuits, logic circuits, microprocessors, GPUs, DSPs, or controllers from any desired family or manufacturer. The hardware processor may be a semiconductor based (e.g., silicon based) device. In this example, the processor implements the example naming layer 202, the example source manager 204, the example directory 206, the example distributed database 208, the example credential manager 210, the example communication interface 212, the example service manager 214, the example publisher 216, the example commitment manager 218, the example extractor 220, the example collector 222, the example indexer 224, and/or, more generally, the example telemetry controller 130B of FIGS. 1 and/or 2, the example first telemetry data 136A, the example first executable 137, the example first orchestrator 142, the example first scheduler 144, the example first EP database 148, the example first resource(s) 149, the example first security controller 161, and/or, more generally, the example first edge platform 140 of FIGS. 1 and/or 2. While the processor platform 900 of FIG. 9 is described in connection with the telemetry controller 130B of the first edge platform 140 of FIGS. 1 and/or 2, any suitable telemetry controller 130A-C and/or edge platform 140, 150 may be implemented. For example, the processor platform 900 may be structured implement the example naming layer 202, the example source manager 204, the example directory 206, the example distributed database 208, the example credential manager 210, the example communication interface 212, the example service manager 214, the example publisher 216, the example commitment manager 218, the example extractor 220, the example collector 222, the example indexer 224, and/or, more generally, the example telemetry controller 130C of FIGS. 1 and/or 2, the example second telemetry data 136B, the example second executable 139, the example second orchestrator 152, the example second scheduler 154, the example second EP database 158, the example second resource(s) 159, the example second security controller 162, and/or, more generally, the example second edge platform 150 of FIGS. 1 and/or 2.

The processor 912 of the illustrated example includes a local memory 913 (e.g., a cache). The processor 912 of the illustrated example is in communication with a main memory including a volatile memory 914 and a non-volatile memory 916 via a bus 918. The volatile memory 914 may be implemented by Synchronous Dynamic Random Access Memory (SDRAM), Dynamic Random Access Memory (DRAM), RAMBUS^{®} Dynamic Random Access Memory (RDRAMR) and/or any other type of random access memory device. The non-volatile memory 916 may be implemented by flash memory and/or any other desired type of memory device. Access to the main memory 914, 916 is controlled by a memory controller.

The processor platform 900 of the illustrated example also includes an interface circuit 920. The interface circuit 920 may be implemented by any type of interface standard, such as an Ethernet interface, a universal serial bus (USB), a Bluetooth^{®} interface, a near field communication (NFC) interface, and/or a PCI express interface.

In the illustrated example, one or more input devices 922 are connected to the interface circuit 920. The input device(s) 922 permit(s) a user to enter data and/or commands into the processor 912. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 924 are also connected to the interface circuit 920 of the illustrated example. The output devices 924 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 920 of the illustrated example, thus, typically includes a graphics driver card, a graphics driver chip and/or a graphics driver processor.

The interface circuit 920 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 926. The communication can be via, for example, an Ethernet connection, a digital subscriber line (DSL) connection, a telephone line connection, a coaxial cable system, a satellite system, a line-of-site wireless system, a cellular telephone system, etc.

The processor platform 900 of the illustrated example also includes one or more mass storage devices 928 for storing software and/or data. Examples of such mass storage devices 928 include floppy disk drives, hard drive disks, compact disk drives, Blu-ray disk drives, redundant array of independent disks (RAID) systems, and digital versatile disk (DVD) drives.

The machine executable instructions 932 of FIGS. 3, 4, 5, 6, 7, and/or 8 may be stored in the mass storage device 928, in the volatile memory 914, in the non-volatile memory 916, and/or on a removable non-transitory computer readable storage medium such as a CD or DVD.

From the foregoing, it will be appreciated that example methods, apparatus and articles of manufacture have been disclosed that manage telemetry data in an edge environment. Example disclosed methods, apparatus and articles of manufacture improve the efficiency of using a computing device by enabling telemetry collection among edge platforms to provide telemetry data in a just-in-time, just-where-needed, adaptation of telemetry data. Examples disclosed herein enable a such telemetry collection by implementing a distributed network of telemetry controllers configured to commit to requests in a wish list (e.g., telemetry wish list) and further store telemetry data in a distributed database. Example disclosed methods, apparatus and articles of manufacture are well suited to a distributed, decentralized, and partial trust, environment for edge platforms existing in various locations and with various security constraints and/or privacy domains. Examples disclosed herein enable telemetry data to be lossy and non-consistent. In this manner, collection and processing of telemetry data into a distributed database may be timestamped to ensure that the most recent telemetry data is utilized. Such examples enable accurate interpolation and/or extrapolation to obtain any possible missing intermediate and/or current versions of telemetry data, during all stages of processing.

Example disclosed methods, apparatus and articles of manufacture improve the efficiency of using a computing device by enabling telemetry data processing to occur independent of other data systems or applications. Examples disclosed herein may be implemented using existing data networks that are unique to networking trends such as NDN's, ICN's, CDN's, NFN's, and IoT resource model, and/or any suitable data network associated with edge computing.

Further, the disclosed methods, apparatus and articles of manufacture improve the efficiency of using a computing device by establishing a priority channel to facilitate safe and efficient transmission of telemetry data. Example disclosed methods, apparatus and articles of manufacture are accordingly directed to one or more improvement(s) in the functioning of a computer.

The following claims are hereby incorporated into this Detailed Description by this reference, with each claim standing on its own as a separate embodiment of the present disclosure.

## Claims

1. An apparatus (130A-C) to manage telemetry data (136A-C) in an edge environment (110), the apparatus comprising:
a publisher (216) included in a first edge platform (140), being configured to publish, to a second edge platform (150), a telemetry wish list obtained from a consumer, the telemetry wish list including telemetry tasks to execute and being configured to publish to the second edge platform (150) a commitment accepted by the first edge platform;
a commitment determiner (226), being configured to determine whether a commitment is viable to execute at least one of the telemetry tasks in the telemetry wish list, wherein the commitment is viable to execute the at least one telemetry task if a component (216, 220, 222, 224) of the apparatus is capable of executing said task, the commitment to be processed to identify the telemetry data;
wherein the commitment determiner (226) is configured to determine whether the viable commitment has already been accepted by any other component, if the commitment determiner (226) determines that the commitment is viable to execute the at least one telemetry task; and
wherein the commitment determiner (226) is configured to transmit an indication of accepting the commitment to the publisher (216), if the commitment determiner (226) determines that another component has not accepted the commitment;
a communication interface (212) being configured to establish a communication channel to facilitate transmission of the telemetry data from the first edge platform (140) to the second edge platform (150); and
a service manager (214), being configured to process the commitment for a time period.

2. The apparatus of claim 1, wherein the communication interface (212) is to establish the communication channel by:
configuring a first bandwidth portion from a first communication connection between the first edge platform (140) and a server (112) ;
configuring a second bandwidth portion from a second communication connection between the first edge platform and the second edge platform (150); and
combining the first bandwidth portion and the second bandwidth portion.

3. The apparatus of claim 1 or 2, further including at least one of:
an extractor (220) to process the commitment when the at least one of the telemetry tasks is to extract the telemetry data (136A-C);
a collector (222) to process the commitment when the at least one of the telemetry tasks is to collect the telemetry data; or
an indexer (224) to process the commitment when the at least one of the telemetry tasks is to index the telemetry data.

4. A method to manage telemetry data in an edge environment, the method comprising:
publishing, by a publisher (216) included in a first edge platform (140) to a second edge platform (150), a telemetry wish list obtained from a consumer, the telemetry wish list including telemetry tasks to execute;
determining, by a commitment determiner (226), whether a commitment is viable to execute at least one of the telemetry tasks in the telemetry wish list wherein the commitment is viable to execute the at least one telemetry task if a component (216, 220, 222, 224) of the apparatus is capable of executing said task, the commitment to be processed to identify the telemetry data (136A-C);
determining, by the commitment determiner (226), whether the viable commitment has already been accepted by any other component, if the commitment determiner (226) determines that the commitment is viable to execute the at least one telemetry task; and
transmitting, by the commitment determiner (226), an indication of accepting the commitment to the publisher (216), if the commitment determiner (226) determines that another component has not accepted the commitment;
establishing, by a communication interface (212), a communication channel to facilitate transmission of the telemetry data from a first edge platform (140) to the second edge platform (140, 150); and
processing, by a service manager (214), the commitment for a time period;
publishing, by the publisher (216), to the second edge platform (150) the commitment accepted by the first edge platform (140).

5. The method of claim 4, further including:
configuring a first bandwidth portion from a first communication connection between the first edge platform (140) and a server (112);
configuring a second bandwidth portion from a second communication connection between the first edge platform and the second edge platform (140, 150); and
combining the first bandwidth portion and the second bandwidth portion.

6. The method of any of claims 4 or 5, further including storing the telemetry data (136A-C) in a database (148, 158), the database distributed among the first edge platform (140) and the second edge platform (150).

7. The method of any of claims 4-6, further including providing credentialed access to the second edge platform (150) to access the telemetry data (136A-C).

8. The method of claim 7, further comprising:
processing the commitment by extracting the telemetry data (136A-C) when the at least one of the telemetry tasks is to extract the telemetry data;
processing the commitment by collecting the telemetry data when the at least one of the telemetry tasks is to collect the telemetry data; or
processing the commitment by indexing the telemetry data when the at least one of the telemetry tasks is to index the telemetry data.

9. A non-transitory computer readable storage medium comprising data which may be configured into executable instructions and, when configured and executed by an apparatus according to the claims 1-3 cause at least one processor of the apparatus to carry out the method of any one of the claims 4-8.

## Patentansprüche

1. Vorrichtung (130A-C) zur Verwaltung von Telemetriedaten (136A-C) in einer Randumgebung (110), die Vorrichtung umfassend:
einen Veröffentlicher (216), der in einer ersten Randplattform (140) enthalten und zum Veröffentlichen, an eine zweite Randplattform (150), einer von einem Verbraucher erhaltenen Telemetriewunschliste, die Telemetriewunschliste einschließlich Telemetrieaufgaben zur Ausführung, ausgelegt ist, und zum Veröffentlichen, an die zweite Randplattform (150), einer durch die erste Randplattform angenommenen Zusage ausgelegt ist;
einen Zusagebestimmer (226), der zum Bestimmen, ob eine Zusage zur Ausführung von zumindest einer der Telemetrieaufgaben in der Telemetriewunschliste praktikabel ist, ausgelegt ist, wobei die Zusage zur Ausführung der zumindest einen Telemetrieaufgabe praktikabel ist, wenn eine Komponente (216, 220, 222, 224) der Vorrichtung zum Ausführen der Aufgabe in der Lage ist, wobei die Zusage zum Identifizieren der Telemetriedaten zu verarbeiten ist;
wobei der Zusagebestimmer (226) zum Bestimmen, ob die praktikable Zusage bereits durch eine andere Komponente angenommen wurde, ausgelegt ist, wenn der Zusagebestimmer (226) bestimmt, dass die Zusage zur Ausführung der zumindest einen Telemetrieaufgabe praktikabel ist; und
wobei der Zusagebestimmer (226) zur Übertragung einer Angabe des Annehmens der Zusage an den Veröffentlicher (216) ausgelegt ist, wenn der Zusagebestimmer (226) bestimmt, dass eine andere Komponente die Zusage nicht angenommen hat;
eine Kommunikationsschnittstelle (212), die zum Einrichten eines Kommunikationskanals zur Unterstützung einer Übertragung der Telemetriedaten von der ersten Randplattform (140) an die zweite Randplattform (150) ausgelegt ist; und
einen Dienstmanager (214), der zum Verarbeiten der Zusage für einen Zeitraum ausgelegt ist.

2. Vorrichtung nach Anspruch 1, wobei die Kommunikationsschnittstelle (212) den Kommunikationskanal einrichten soll durch:
Konfigurieren eines ersten Bandbreitenabschnitts von einer ersten Kommunikationsverbindung zwischen der ersten Randplattform (140) und einem Server (112);
Konfigurieren eines zweiten Bandbreitenabschnitts von einer zweiten Kommunikationsverbindung zwischen der ersten Randplattform und der zweiten Randplattform (150) und
Kombinieren des ersten Bandbreitenabschnitts und des zweiten Bandbreitenabschnitts.

3. Vorrichtung nach Anspruch 1 oder 2, ferner umfassend zumindest eines von:
einem Extraktor (220) zum Verarbeiten der Zusage, wenn die zumindest eine der Telemetrieaufgaben darin besteht, die Telemetriedaten (136A-C) zu extrahieren;
einem Sammler (222) zum Verarbeiten der Zusage, wenn die zumindest eine der Telemetrieaufgaben darin besteht, die Telemetriedaten zu sammeln; oder
einem Indexer (224) zum Verarbeiten der Zusage, wenn die zumindest eine der Telemetrieaufgaben darin besteht, die Telemetriedaten zu indexieren.

4. Verfahren zur Verwaltung von Telemetriedaten in einer Randumgebung, das Verfahren umfassend:
Veröffentlichen, durch einen Veröffentlicher (216), der in einer ersten Randplattform (140) enthalten ist, an eine zweite Randplattform (150), einer von einem Verbraucher erhaltenen Telemetriewunschliste, die Telemetriewunschliste einschließlich Telemetrieaufgaben zur Ausführung;
Bestimmen, durch einen Zusagebestimmer (226), ob eine Zusage zur Ausführung von zumindest einer der Telemetrieaufgaben in der Telemetriewunschliste praktikabel ist, wobei die Zusage zur Ausführung der zumindest einen Telemetrieaufgabe praktikabel ist, wenn eine Komponente (216, 220, 222, 224) der Vorrichtung zum Ausführen der Aufgabe in der Lage ist, wobei die Zusage zum Identifizieren der Telemetriedaten (136A-C) zu verarbeiten ist;
Bestimmen, durch den Zusagebestimmer (226), ob die praktikable Zusage bereits durch eine andere Komponente angenommen wurde, wenn der Zusagebestimmer (226) bestimmt, dass die Zusage zur Ausführung der zumindest einen Telemetrieaufgabe praktikabel ist; und
Übertragen, durch den Zusagebestimmer (226), einer Angabe des Annehmens der Zusage an den Veröffentlicher (216), wenn der Zusagebestimmer (226) bestimmt, dass eine andere Komponente die Zusage nicht angenommen hat;
Einrichten, durch eine Kommunikationsschnittstelle (212), eines Kommunikationskanals zur Unterstützung einer Übertragung der Telemetriedaten von einer ersten Randplattform (140) an die zweite Randplattform (140, 150) und
Verarbeiten, durch einen Dienstmanager (214), der Zusage für einen Zeitraum;
Veröffentlichen, durch den Veröffentlicher (216) an die zweite Randplattform (150), der durch die erste Randplattform (140) angenommenen Zusage.

5. Verfahren nach Anspruch 4, das ferner einschließt:
Konfigurieren eines ersten Bandbreitenabschnitts von einer ersten Kommunikationsverbindung zwischen der ersten Randplattform (140) und einem Server (112);
Konfigurieren eines zweiten Bandbreitenabschnitts von einer zweiten Kommunikationsverbindung zwischen der ersten Randplattform und der zweiten Randplattform (140, 150) und
Kombinieren des ersten Bandbreitenabschnitts und des zweiten Bandbreitenabschnitts.

6. Verfahren nach einem der Ansprüche 4 oder 5, ferner umfassend ein Speichern der Telemetriedaten (136A-C) in einer Datenbank (148, 158), wobei die Datenbank zwischen der ersten Randplattform (140) und der zweiten Randplattform (150) verteilt ist.

7. Verfahren nach einem der Ansprüche 4-6, ferner umfassend ein Bereitstellen eines auf Anmeldeinformationen basierten Zugriffs auf die zweite Randplattform (150) für einen Zugriff auf die Telemetriedaten (136A-C).

8. Verfahren nach Anspruch 7, ferner umfassend:
Verarbeiten der Zusage durch Extrahieren der Telemetriedaten (136A-C), wenn die zumindest eine der Telemetrieaufgaben darin besteht, die Telemetriedaten zu extrahieren;
Verarbeiten der Zusage durch Sammeln der Telemetriedaten, wenn die zumindest eine der Telemetrieaufgaben darin besteht, die Telemetriedaten zu sammeln; oder
Verarbeiten der Zusage durch Indexieren der Telemetriedaten, wenn die zumindest eine der Telemetrieaufgaben darin besteht, die Telemetriedaten zu indexieren.

9. Nichttransitorisches computerlesbares Speichermedium, umfassend Daten, die in ausführbare Anweisungen konfiguriert werden können und, bei einer Konfiguration und Ausführung durch eine Vorrichtung nach den Ansprüchen 1-3, zumindest einen Prozessor der Vorrichtung zur Ausführung des Verfahrens nach einem der Ansprüche 4-8 veranlassen.

## Revendications

1. Appareil (130A-C) de gestion de données de télémétrie (136A-C) dans un environnement de bord (110), l'appareil comprenant :
un diffuseur (216) contenu dans une première plate-forme de bord (140), configuré pour publier, sur une deuxième plate-forme de bord (150), une liste de souhaits de télémétrie obtenue d'un consommateur, la liste de souhaits de télémétrie contenant des tâches de télémétrie à exécuter et étant configurée pour publier sur la deuxième plate-forme de bord (150) un engagement accepté par la première plate-forme de bord ;
un module de détermination d'engagement (226), configuré pour déterminer si un engagement est viable pour exécuter au moins une des tâches de télémétrie de la liste de souhaits de télémétrie, l'engagement étant viable pour exécuter l'au moins une tâche de télémétrie si un composant (216, 220, 222, 224) de l'appareil est capable d'exécuter ladite tâche, l'engagement à traiter pour identifier les données de télémétrie ;
dans lequel le module de détermination d'engagement (226) est configuré pour déterminer si l'engagement viable a déjà été accepté par un autre composant, si le module de détermination d'engagement (226) détermine que l'engagement est viable pour exécuter l'au moins une tâche de télémétrie ; et
dans lequel le module de détermination d'engagement (226) est configuré pour transmettre une indication d'acceptation de l'engagement au diffuseur (216), si le module de détermination d'engagement (226) détermine qu'aucun autre composant n'a accepté l'engagement ;
une interface de communication (212) configurée pour établir un canal de communication pour permettre la transmission des données de télémétrie entre la première plate-forme de bord (140) et la deuxième plate-forme de bord (150) ; et
un gestionnaire de services (214), configuré pour traiter l'engagement pendant une certaine période de temps.

2. Appareil selon la revendication 1, dans lequel l'interface de communication (212) est chargée d'établir le canal de communication :
en configurant une première partie de largeur de bande à partir d'une première connexion de communication entre la première plate-forme de bord (140) et un serveur (112) ;
en configurant une deuxième partie de largeur de bande à partir d'une deuxième connexion de communication entre la première plate-forme de bord et la deuxième plate-forme de bord (150) ; et
en combinant la première partie de largeur de bande et la deuxième partie de largeur de bande.

3. Appareil selon la revendication 1 ou 2, comprenant également au moins un élément parmi :
un extracteur (220) servant à traiter l'engagement lorsque l'au moins une des tâches de télémétrie consiste à extraire les données de télémétrie (136A-C) ;
un collecteur (222) servant à traiter l'engagement lorsque l'au moins une des tâches de télémétrie consiste à collecter les données de télémétrie ; ou
un indexeur (224) servant à traiter l'engagement lorsque l'au moins une des tâches de télémétrie consiste à indexer les données de télémétrie.

4. Procédé de gestion de données de télémétrie dans un environnement de bord, le procédé comprenant les étapes consistant à :
publier, par un diffuseur (216) contenu dans une première plate-forme de bord (140) sur une deuxième plate-forme de bord (150), une liste de souhaits de télémétrie obtenue d'un consommateur, la liste de souhaits de télémétrie contenant des tâches de télémétrie à exécuter ;
déterminer, par un module de détermination d'engagement (226), si un engagement est viable pour exécuter au moins une des tâches de télémétrie de la liste de souhaits de télémétrie, l'engagement étant viable pour exécuter l'au moins une tâche de télémétrie si un composant (216, 220, 222, 224) de l'appareil est capable d'exécuter ladite tâche, l'engagement à traiter pour identifier les données de télémétrie (136A-C) ;
déterminer, par le module de détermination d'engagement (226), si l'engagement viable a déjà été accepté par un autre composant, si le module de détermination d'engagement (226) détermine que l'engagement est viable pour exécuter l'au moins une tâche de télémétrie ; et
transmettre, par le module de détermination d'engagement (226), une indication d'acceptation de l'engagement au diffuseur (216), si le module de détermination d'engagement (226) détermine qu'aucun autre composant n'a accepté l'engagement ;
établir, par une interface de communication (212), un canal de communication pour permettre la transmission des données de télémétrie entre une première plate-forme de bord (140) et la deuxième plate-forme de bord (140, 150) ; et
traiter, par un gestionnaire de services (214), l'engagement pendant une certaine période de temps ;
publier, par le diffuseur (216), sur la deuxième plate-forme de bord (150), l'engagement accepté par la première plate-forme de bord (140).

5. Procédé selon la revendication 4, comprenant également les étapes consistant à :
configurer une première partie de largeur de bande à partir d'une première connexion de communication entre la première plate-forme de bord (140) et un serveur (112) ;
configurer une deuxième partie de largeur de bande à partir d'une deuxième connexion de communication entre la première plate-forme de bord et la deuxième plate-forme de bord (140, 150) ; et
combiner la première partie de largeur de bande et la deuxième partie de largeur de bande.

6. Procédé selon l'une quelconque des revendications 4 et 5, comprenant également le stockage des données de télémétrie (136A-C) dans une base de données (148, 158), la base de données étant distribuée entre la première plate-forme de bord (140) et la deuxième plate-forme de bord (150).

7. Procédé selon l'une quelconque des revendications 4 à 6, comprenant également la fourniture d'un accès identifié à la deuxième plate-forme de bord (150) pour l'accès aux données de télémétrie (136A-C).

8. Procédé selon la revendication 7, comprenant également les étapes consistant à :
traiter l'engagement en extrayant les données de télémétrie (136A-C) lorsque l'au moins une des tâches de télémétrie consiste à extraire les données de télémétrie;
traiter l'engagement en collectant les données de télémétrie lorsque l'au moins une des tâches de télémétrie consiste à collecter les données de télémétrie ; ou
traiter l'engagement en indexant les données de télémétrie lorsque l'au moins une des tâches de télémétrie consiste à indexer les données de télémétrie.

9. Support de stockage non transitoire lisible par ordinateur comprenant des données qui peuvent être configurées en instructions exécutables et qui, lorsqu'elles sont configurées et exécutées par un appareil selon l'une quelconque des revendications 1 à 3, amènent au moins un processeur de l'appareil à mettre en œuvre le procédé selon l'une quelconque des revendications 4 à 8.
